(19) Europäisches Patentamt
European Patent Office
Office européen des brevets

(11) **EP 2 693 176 B1**

(12) **FASCICULE DE BREVET EUROPEEN**

(45) Date de publication et mention de la délivrance du brevet:
**06.11.2019 Bulletin 2019/45**

(51) Int Cl.:
***G01H 1/00*** *(2006.01)*     ***G01M 13/04*** *(2019.01)*

(21) Numéro de dépôt: **13003425.9**

(22) Date de dépôt: **08.07.2013**

(54) **Procédé de détection de défauts d'un roulement par analyse vibratoire**

Verfahren zur Erkennung von Mängeln eines Rolllagers durch Schwingungsanalyse

Method for detecting defects of a bearing by vibrational analysis

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.07.2012 FR 1202152**

(43) Date de publication de la demande:
**05.02.2014 Bulletin 2014/06**

(73) Titulaire: **Airbus Helicopters**
**13725 Marignane Cedex (FR)**

(72) Inventeurs:
• **Girondin, Victor**
**13100 AIX EN Provence (FR)**
• **Cassar, Jean-Philippe**
**59790 Ronchin (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 1 970 691     US-A1- 2010 332 186**
**US-B1- 7 136 794**

• **Amit Bhende ET AL: "VSRD assessment of bearing fault detection using vibrating signal analysis", , 1 janvier 2011 (2011-01-01), pages 249-261, XP055060283, Extrait de l'Internet: URL:http://www.vsrdjournals.com/vsrd/Issue /2011_5_May/4_Amit_R_Bhende_Research_Co mmu nication_May_2011.pdf [extrait le 2013-04-18]**

## Description

La présente invention se situe dans le domaine des procédés de surveillance d'un roulement assurant au moins partiellement le guidage en rotation d'au moins un composant. L'invention concerne plus particulièrement un procédé de détection de défauts d'un roulement par analyse vibratoire.

Un roulement assure au moins partiellement, et généralement en coopération avec au moins un autre roulement, le guidage en rotation d'un composant, tel qu'un arbre, dans un logement généralement fixe afin par exemple de transmettre un mouvement de rotation et un couple. Cependant, l'arbre peut être fixe, le logement étant alors en rotation autour de cet arbre et transmettant un mouvement de rotation et un couple. On prend ci-après comme hypothèse que l'arbre est en rotation et le logement fixe.

Un tel roulement comprend traditionnellement plusieurs éléments dont une bague intérieure, une bague extérieure et une pluralité de corps roulants, tels que des billes ou des rouleaux. Ces corps roulants peuvent être agencés sur une ou deux rangées et roulent entre la bague intérieure et la bague extérieure. Ce roulement peut comporter également une ou plusieurs cages assurant un espacement constant entre chaque corps roulant. Cependant, certains roulements ne disposent pas de cage, les corps roulants étant alors jointifs.

La bague intérieure du roulement est généralement solidaire de l'arbre, la bague extérieure étant fixe par rapport au logement dans lequel le roulement est situé. De plus, la bague intérieure peut être une partie intégrante de l'arbre. De même, la bague extérieure peut être une partie intégrante du logement.

L'arbre, qui transmet le mouvement de rotation et le couple, subit en général une ou plusieurs sollicitations qui se transmettent au moins partiellement à chaque roulement du dispositif de guidage. Par suite, chaque élément de chaque roulement s'use plus ou moins rapidement. Cette usure peut par exemple être une dégradation de l'état de surface des bagues intérieures et extérieures ainsi que de l'état de surface, voire de la forme, des corps roulants. Cette usure peut également être à l'origine de l'apparition de limailles venant des corps roulants ou bien des bagues.

Cette usure peut alors générer des chocs lors du fonctionnement du roulement qui entraînent une dégradation de son fonctionnement, et par suite une dégradation de la transmission du mouvement de rotation et du couple. Cette dégradation peut par exemple conduire jusqu'à un grippage et un blocage complet du roulement rendant alors impossible la transmission du mouvement de rotation et du couple. Ces chocs peuvent également générer des fissures sur au moins une des bagues et aboutir à la rupture de cette bague et ainsi à la destruction du roulement.

Il convient alors de surveiller l'usure de chaque roulement d'un tel dispositif de guidage, et plus précisément de chacun de ses éléments, afin de détecter de façon précoce un endommagement d'un de ses éléments et d'anticiper ainsi une dégradation, voire une rupture, de la transmission du mouvement de rotation et du couple par l'arbre.

Il est connu d'utiliser un signal vibratoire mesuré à proximité du roulement, par exemple par un capteur d'accélération, afin d'obtenir les fréquences vibratoires de chaque élément du roulement. En effet, un défaut présent sur un élément d'un roulement génère une vibration selon une fréquence spécifique. De fait, en filtrant et en isolant les différentes fréquences des vibrations émises par les éléments d'un roulement en fonctionnement, il est possible d'en déduire la présence ou non d'un défaut sur ces éléments.

On connait par exemple le document EP 0889313 qui décrit une méthode de surveillance d'une transmission mécanique d'un véhicule grâce à des capteurs d'accélération. Après acquisition d'un signal par un capteur d'accélération, on transforme, par exemple selon la transformation de Fourier, ce signal temporel en signal fréquentiel comprenant des raies spectrales. Ensuite, on modifie l'amplitude de ces raies spectrales, en fonction de leurs fréquences et de fréquences de référence ainsi que selon une loi prédéterminée. Enfin, on compare un moment d'ordre six de la séquence de ces raies spectrales obtenues avec un seuil prédéterminé pour définir s'il y a un défaut au sein de la transmission du véhicule.

De plus, le document EP 1111364 décrit un procédé de détection de l'endommagement de pièces d'un moteur, tel que des roulements à billes. Un tel procédé permet une surveillance permanente et une détection précoce de cet endommagement en comparant un signal vibratoire obtenu par au moins un capteur d'accélération sur ce système et des signaux préalablement enregistrés lors d'une phase préliminaire, sur ce même système sans défaut et sur ce même système comportant les différents défauts possibles. On vérifie tout d'abord que pendant l'acquisition de ce signal vibratoire, le régime de rotation du moteur est resté stable afin de limiter la présence de bruit sur ce signal vibratoire, puis on transforme ce signal vibratoire temporel en un signal fréquentiel, tout en éliminant les fréquences fondamentales propres au moteur.

On effectue ensuite un calcul de cohérence entre ce signal fréquentiel et le même signal fréquentiel décalé à la fréquence correspondant à des défauts et mise en évidence au cours de la phase préliminaire. L'analyse des pics de cohérence ainsi obtenus avec des seuils prédéterminés permet de déterminer la présence ou non d'un défaut sur une ou plusieurs pièces du moteur.

On connaît également le document EP 1970691 qui décrit un procédé de détection de l'usure d'un roulement d'un turbomoteur. Tout d'abord, un signal vibratoire est acquis pendant une phase de régime de rotation bas et renouvelable du turbomoteur afin d'obtenir un signal fiable et peu affecté par des bruits. Après transformation de ce signal vibratoire temporel en un signal fréquentiel, on calcule la moyenne des amplitudes des raies spectrales, puis un rapport entre les pics d'amplitude proches des fréquences multiples d'une fréquence théorique correspondant à un défaut et l'amplitude d'un roulement sans défaut. Enfin, on compare ce rapport avec un seuil prédéterminé qui permet de définir la présence ou non d'un défaut.

En outre, le document WO 2010/081983 décrit un procédé et un système de surveillance d'un turbomoteur permettant de mettre en évidence un défaut ou un fonctionnement anormal de ce turbomoteur. Après acquisition d'un signal vibratoire et transformation en un signal fréquentiel, on compare ce signal vibratoire fréquentiel avec différents signaux préalablement obtenus correspondant à ce type de turbomoteur comportant un défaut ou ayant un fonctionnement anormal. Suite à cette comparaison, un message indiquant le composant comportant un défaut ou un fonctionnement anormal peut être émis.

De plus, le document US 7136794 décrit une méthode d'estimation d'un ou plusieurs indicateurs de condition permettant de déterminer un indicateur de fonctionnement d'un composant. Cette méthode est destinée à un composant d'un système mécanique, tel que des engrenages et/ou des roulements à bielles, les indicateurs de condition et un indicateur de fonctionnement permettant de détecter des défauts sur ce composant. Ces indicateurs de condition peuvent être déterminés à partir de données issues de capteurs de ce composant ou de ce système ainsi que de données de configurations de ce composant ou de ce système.

Le document US 2010/332186 décrit quand à lui un procédé permettant de déterminer l'intervalle de temps entre des évènements périodiques perturbant un signal. Une probabilité de cet intervalle de temps est une fonction des probabilités des occurrences de ces évènements, elles-mêmes déterminées à partir des valeurs du signal.

Enfin, la publication « Assessment of bearing fault detection using vibration signais analysis » publié dans le VSRD technical and non-Technical Journal de 2011 décrit différentes techniques d'analyses vibratoires appliquées au contrôle de roulement à billes, notamment en analysant les amplitudes et les fréquences de signaux vibratoires acquis par exemple par des accéléromètres. Ces signaux vibratoires peuvent être analysés dans le domaine temporel ou bien le domaine fréquentiel.

Les inconvénients que l'on peut retrouver dans ces différents procédés sont principalement la difficulté à isoler les fréquences relatives aux défauts des éléments du roulement ainsi que le niveau de fiabilité que l'on peut accorder à ces fréquences.

En effet, le signal mesuré contient certes les fréquences des vibrations émises par le roulement et ses éléments, mais il contient également des vibrations parasites qui polluent ce signal mesuré et ne permettent pas d'isoler efficacement les fréquences de vibration révélatrices des défauts recherchés. Ces vibrations parasites sont principalement émises par d'autres composants à proximité du roulement, tels que l'arbre et les composants du dispositif de guidage. Ces vibrations parasites peuvent êtres générées d'une part par la rotation de l'arbre et le couple qu'il transmet ainsi que par les sollicitations qu'il subit et d'autre part par des éléments extérieurs, tels que les explosions d'un moteur thermique auquel l'arbre est lié ou bien les vibrations d'un véhicule dans lequel le dispositif de guidage est installé.

De fait, la difficulté rencontrée pour isoler les fréquences des défauts des éléments du roulement rend difficile l'estimation d'un niveau de fiabilité de cette détection des défauts. De plus, les variations de la vitesse de rotation de l'arbre ont un effet direct les fréquences de vibration du roulement et de ses éléments, et par suite sur ce niveau de fiabilité.

Enfin, certains systèmes utilisant des roulements imposent un temps très court de traitement de l'information et de prise de décision vis-à-vis de la présence ou non d'un défaut, par exemple un temps de l'ordre d'une minute. En effet, cette décision doit par exemple être prise entre deux arrêts d'un système ou pendant une période pendant laquelle ce système fonctionne à un régime de rotation faible et stabilisé. Par contre, certains procédés nécessitent des mesures successives afin de détecter une évolution du comportement des éléments d'un roulement qui peut correspondre à une dégradation de cet élément et ne répondent donc pas au besoin de tels systèmes.

La présente invention a alors pour objet de proposer un procédé permettant de pallier les inconvénients mentionnés ci-dessus afin de détecter de façon fiable, précoce et rapide les défauts des éléments d'un roulement par l'analyse d'un signal vibratoire.

Ce roulement fait partie généralement d'un dispositif de guidage d'un composant en rotation, tel un arbre, ce dispositif de guidage étant lui-même intégré à un système. Ce système peut par exemple être un moteur thermique, transmettant un mouvement de rotation et un couple par l'intermédiaire de l'arbre. Ce système comporte au moins un capteur d'accélération positionné à proximité du roulement afin de capter les vibrations émises par le roulement et plus particulièrement ses éléments.

Il est connu que, pour chaque élément d'un roulement, un défaut se manifeste principalement par l'apparition d'un ou plusieurs chocs lors de son fonctionnement, générant au moins un pic d'énergie à une fréquence de vibration particulière, ainsi qu'à des fréquences multiples de cette fréquence de vibration particulière appelées harmoniques. Cette fréquence de vibration particulière est calculable théoriquement et sera désignée par l'expression « fréquence fondamentale théorique $\alpha^{th}$ ».

L'invention concerne un procédé de détection de défauts d'un roulement comportant quatre étapes, conformément à la revendication 1.

Tout d'abord, ce procédé est une méthode absolue dans le sens où une seule acquisition suffit pour déterminer s'il y a ou non un défaut sur un élément du roulement. En effet, et contrairement à d'autres méthodes se basant par exemple sur une évolution des mesures au cours de différents cycles de fonctionnement du roulement, le procédé selon l'invention réalise une seule étape de prétraitement, une seule étape d'analyse et une seule étape de diagnostic. De fait, le temps nécessaire pour statuer sur la présence d'un défaut est court et permet donc d'intervenir pendant un bref temps d'arrêt d'un système ou pendant un temps de régime de rotation stabilisé.

De la sorte, le temps d'acquisition prédéterminé du signal émis par le capteur d'accélération peut être assez long afin notamment de contenir suffisamment d'informations sur les éléments du roulement, sans remettre en cause la performance du procédé selon l'invention. Ce temps d'acquisition prédéterminé dépend de la fréquence de défaut observée. Il peut être par exemple de l'ordre de cinquante périodes théoriques $T^{th}$ d'un signal vibratoire correspondant

$$T^{th} = \frac{1}{\alpha^{th}}.$$

à un défaut sur le roulement, c'est-à-dire l'inverse d'une fréquence fondamentale théorique $\alpha^{th}$, tel que
Ce temps d'acquisition prédéterminé peut être d'une durée de l'ordre de trois secondes.

Il est possible, lors de l'étape préliminaire, de déterminer de manière connue, pour chaque défaut potentiel de chaque élément du roulement, au moins une fréquence fondamentale théorique $\alpha^{th}$ de ce défaut, cette fréquence fondamentale théorique $\alpha^{th}$ dépendant principalement de la géométrie de cet élément et de sa vitesse de rotation.

Cependant, il peut exister une différence entre cette fréquence fondamentale théorique $\alpha^{th}$ et la fréquence réelle de présence de ce défaut $\hat{\alpha}$, en fonction par exemple des conditions de fonctionnement du roulement, telles que les sollicitations subies par le roulement pouvant déformer ses éléments ou bien les dispersions géométriques de ces éléments. Cette différence peut grandement fausser la détection de ce défaut. Avantageusement, une méthode de réajustement fréquentiel est alors utilisée par le procédé selon l'invention pour permettre de retrouver cette fréquence réelle $\hat{\alpha}$ de présence de ce défaut pour chaque élément. On désigne pour la suite de la description cette fréquence réelle $\hat{\alpha}$ par l'expression « fréquence de présence d'un défaut $\hat{\alpha}$ ».

Cette fréquence de présence d'un défaut $\hat{\alpha}$ correspond ainsi à une fréquence vibratoire caractéristique d'un défaut présent sur un élément du roulement.

Dans le cadre de cette méthode de réajustement fréquentiel, on estime tout d'abord que la fréquence de présence d'un défaut $\hat{\alpha}$ peut être éloignée de la fréquence fondamentale théorique $\alpha^{th}$ d'au plus une valeur $\Delta f$ appelée dispersion de fréquence. On peut alors estimer, toujours au cours de cette étape préliminaire, une probabilité fondamentale théorique $p^{prior}(f)$, pour chaque fréquence $f$ située dans l'intervalle de dispersion $\llcorner \alpha^{th} - \Delta f;\ \alpha^{th} + \Delta f \lrcorner$, que cette fréquence $f$ soit la fréquence de présence d'un défaut $\hat{a}$. Cette probabilité fondamentale théorique $p^{prior}(f)$, déterminée avant l'acquisition du signal vibratoire des éléments que l'on souhaite surveiller, peut être également désignée par l'expression « probabilité à priori ». Sa valeur est comprise entre 0 et 1.

La dispersion de fréquence $\Delta f$ peut par exemple être obtenue par l'expérience, par exemple suite à un calcul statique sur la base de mesures effectuées sur des éléments comportant ce défaut. Cette probabilité fondamentale théorique $p^{prior}(f)$ peut alors suivre une loi normale de moyenne $\alpha^{th}$ et d'écart-type $\Delta f$, également appelée courbe de Gauss. Cette probabilité fondamentale théorique $p^{prior}(f)$ peut également suivre une loi basée sur un grand nombre d'états de référence d'un roulement dégradé.

Cette étape préliminaire peut être réalisée une fois pour toute avant la mise en route du système contenant le roulement surveillé par le procédé selon l'invention et n'est pas effectuée à chaque cycle de ce procédé. Cependant, une mise à jour de cette étape préliminaire est possible afin d'ajouter de nouveaux états de référence suite à des mesures effectuées par ce procédé sur des roulements présentant des défauts et d'affiner ainsi notamment la loi permettant de déterminer la probabilité fondamentale théorique $p^{prior}(f)$.

Ensuite, les étapes suivantes peuvent se dérouler afin de réaliser la surveillance proprement dite du roulement, et plus particulièrement de ses éléments.

Lors de l'étape de prétraitement, on acquiert tout d'abord pendant le temps d'acquisition prédéterminé le signal vibratoire temporel $A_n$ comprenant $N$ échantillons.

Ce signal vibratoire temporel $A_n$ contient le signal vibratoire de chaque élément du roulement, mais également une multitude de signaux vibratoires parasites émis par exemple par l'ensemble des autres composants du système contenant ce roulement. Il convient alors de filtrer ce signal vibratoire temporel $A_n$ afin de supprimer au mieux ces signaux vibratoires parasites. On obtient ainsi un signal vibratoire temporel filtré $A'_n$ contenant essentiellement le signal vibratoire de chaque élément du roulement.

Tout d'abord, le régime de rotation de l'arbre auquel est lié le roulement peut varier pendant le temps d'acquisition prédéterminé du signal vibratoire temporel $A_n$, et par suite perturber le signal vibratoire temporel $A_n$. Il est par contre possible de corriger ce signal vibratoire temporel $A_n$ en utilisant la vitesse instantanée de rotation de cet arbre, qui peut être mesurée par un moyen de mesure approprié. Cette méthode connue permet ainsi de synchroniser le signal vibratoire temporel $A_n$ avec cette vitesse instantanée de rotation de cet arbre et de supprimer ainsi cette perturbation.

Ensuite, il est nécessaire, pour obtenir un signal vibratoire temporel $A_n$ permettant de détecter de façon fiable et efficace un défaut sur un élément du roulement, de supprimer les composantes vibratoires parasites qu'il contient. Ces composantes vibratoires parasites peuvent provenir d'une part d'autres composants du système contenant ce roulement, tels que des engrenages, un moteur, et d'autre part de perturbations extérieures au système qui peuvent être inconnues.

Il convient alors de traiter ces deux sources de composantes vibratoires parasites. Les autres composants du système ont des vitesses connues et souvent différentes de celles des éléments du roulement surveillé. De plus, leurs géométries et leurs positions dans le système sont connues, et par suite les fréquences des vibrations qu'elles génèrent peuvent également être connues. De fait, il est possible de supprimer ces fréquences du signal vibratoire temporel $A_n$ pour supprimer les composantes vibratoires parasites de ces autres composants du système.

Par contre, les fréquences parasites de perturbations extérieures au système sont inconnues. Cependant, on connaît la fréquence fondamentale théorique $\alpha^{th}$ de chaque défaut recherché ainsi que la dispersion de fréquence $\Delta f$ associée à chaque fréquence fondamentale théorique $\alpha^{th}$. On peut alors supposer que les fréquences présentes dans le signal vibratoire temporel $A_n$ qui sont éloignées de chaque fréquence fondamentale théorique $\alpha^{th}$ et de ses harmoniques d'une valeur supérieure à la dispersion de fréquence $\Delta f$ associée correspondent à des perturbations extérieures au système et doivent donc être supprimées.

De plus, afin que cette suppression des composantes vibratoires parasites soit efficace, il est intéressant de traiter un signal fréquentiel plutôt qu'un signal temporel. En effet, un signal temporel représente la variation d'amplitude ou d'intensité d'un signal en fonction du temps et ne permet donc pas de mettre en évidence facilement les différentes fréquences qui le composent. Inversement, un signal fréquentiel représente la variation d'amplitude ou d'intensité d'un signal en fonction de la fréquence et à ce titre se compose de raies spectrales fréquentielles. Il est alors simple, sur un tel signal fréquentiel, de visualiser et de supprimer les fréquences des composantes vibratoires parasites.

Une méthode connue pour transformer un signal temporel en un signal fréquentiel est l'utilisation de la transformation de Fourier. Inversement, on utilise la transformation de Fourier inverse pour transformer un signal fréquentiel en un signal temporel.

De fait, pour supprimer les composantes vibratoires parasites du signal vibratoire temporel $A_n$, on réalise les sous-étapes suivantes :

- on transforme le signal vibratoire temporel $A_n$ en un signal vibratoire fréquentiel $B_n$,

- on supprime du signal vibratoire fréquentiel $B_n$ des fréquences mécaniques vibratoires provenant des composants du système extérieurs au roulement dont les fréquences mécaniques vibratoires sont connues,

- on supprime du signal vibratoire fréquentiel $B_n$ des fréquences éloignées de chaque fréquence fondamentale théorique $\alpha^{th}$ de chaque élément et de ses harmoniques d'une valeur supérieure à la dispersion de fréquence $\Delta f$ associée, et on obtient le signal vibratoire fréquentiel $B'_n$ ainsi modifié,

- on transforme le signal vibratoire fréquentiel $B'_n$ ainsi modifié pour obtenir un signal vibratoire temporel filtré $A'_n$.

Ensuite, après avoir filtré ce signal vibratoire temporel $A_n$, on le décompose en deux signaux, un signal vibratoire temporel déterministe $D_n$ et un signal vibratoire temporel aléatoire $E_n$.

Avantageusement, cette décomposition permet de faciliter par la suite l'analyse et la détection du défaut, notamment en révélant des informations sur la nature de ce défaut lors du diagnostic. En effet, le signal déterministe et le signal aléatoire, présent dans le signal $A_n$ représentent du bruit l'un pour l'autre. Ainsi la précision de la décision finale est amoindrie lorsque les deux signaux restent mélangés. De plus, si le signal aléatoire n'est pas extrait et traité séparément, un défaut contenu exclusivement dans ce signal aléatoire ne pourra pas être isolé et par suite détecté. Cette décomposition présente donc un double intérêt, d'une part améliorer la robustesse du traitement du signal déterministe en supprimant le bruit généré par le signal aléatoire et d'autre part permettre un traitement adapté du signal aléatoire.

Par contre, conserver le signal vibratoire temporel déterministe $D_n$ et un signal vibratoire temporel aléatoire $E_n$ mélangés en un seul signal temporel $A_n$ peut nuire à la décision de la présence ou non de défauts, un défaut présent uniquement dans le signal aléatoire pouvant par exemple passer inaperçu.

Par définition, un signal est déterministe ou prédictible si toutes ses valeurs futures sont prédictibles avec ses valeurs passées. Par exemple un signal périodique est prédictible puisqu'il suffit de le connaitre sur une seule période.

De fait, on peut écrire ce signal vibratoire temporel déterministe $D_n$ sous la forme $D_n = a_1.A'_{n-1} + a_2.A'_{n-2} +...+ a_{n-1}.A'_1$, $a_1$, $a_2...a_{n-1}$ étant des coefficients attachés respectivement aux échantillons du signal vibratoire temporel filtré $A'_n$. Le signal vibratoire temporel aléatoire $E_n$ est alors la différence entre le signal vibratoire temporel filtré $A'_n$ et le signal vibratoire temporel déterministe $D_n$ tel que $E_n = A'_n - D_n$.

Avantageusement, on peut réduire le nombre d'échantillons passés utilisés pour déterminer le signal vibratoire

temporel déterministe $D_n$ de manière à obtenir un compromis entre la vitesse de calcul et la précision de ce signal vibratoire temporel déterministe $D_n$. On peut écrire $D_n = a_1.A'_{n-1} + a_2.A'_{n-2} +...+ a_r.A'_{n-r}$, $a_1, a_2...a_r$ étant des coefficients attachés respectivement aux échantillons du signal vibratoire temporel filtré $A'_n$ et $r$ étant le nombre d'échantillons utilisés pour le calcul. Le nombre d'échantillons $r$ est inférieur à $n$. Les coefficients $a_1, a_2...a_r$ sont alors déterminés selon la méthode connue des moindres carrés, c'est-à-dire afin que la somme $\sum_{n=N-r}^{N} \left(A'_n - D_n\right)^2$ soit minimale.

Le signal vibratoire temporel déterministe $D_n$ et le signal vibratoire temporel aléatoire $E_n$ ainsi obtenus peuvent être utilisés lors de l'étape d'analyse afin de déterminer chaque fréquence de présence d'un défaut $\hat{a}$ et chaque niveau de fiabilité $p(\hat{a})$ associé.

Cependant, afin d'améliorer l'analyse des signaux vibratoires et de finaliser leur transformation, on peut également améliorer l'impulsivité du signal vibratoire temporel déterministe $D_n$ et du signal vibratoire temporel aléatoire $E_n$ lors de cette étape de traitement. Cette transformation permet de mieux mettre en évidence les informations utiles à l'analyse des fréquences de ces signaux, et par suite la détection éventuelle d'un défaut sur un élément du roulement.

En effet, un défaut sur un roulement entraine notamment des chocs répétés qui se traduisent, sur le signal vibratoire temporel $A_n$, par des pics de grandes amplitudes pour au moins une fréquence particulière et ses harmoniques. La présence de pics d'amplitudes élevées est une caractéristique appelée impulsivité On peut mettre en évidence la présence de ces pics sur le signal vibratoire temporel $A_n$, et par suite la présence des chocs au niveau du roulement si on amplifie essentiellement ces pics. On peut par exemple augmenter l'impulsivité d'un signal par un filtre auto-adaptatif, c'est-à-dire de sorte que les coefficients du filtre s'adapteront automatiquement à ce signal.

L'impulsivité d'un signal vibratoire temporel est quantifiée mathématiquement par un indicateur connu de l'homme du métier qui est appelé indicateur de *Kurtosis* ou encore quatrième cumulant statistique normalisé.

Dans notre cas, le signal vibratoire temporel $A_n$ ayant été préalablement filtré et décomposé en un signal vibratoire temporel déterministe $D_n$ et un signal vibratoire temporel aléatoire $E_n$, on améliore donc l'impulsivité de ces deux signaux déterministe et aléatoire $D_n$, $E_n$ afin d'obtenir un signal vibratoire temporel déterministe amélioré $F_n$ et un signal vibratoire temporel aléatoire amélioré $G_n$.

Le signal vibratoire temporel déterministe amélioré $F_n$ est comme précédemment une combinaison linéaire des échantillons précédents du signal vibratoire temporel déterministe $D_n$ tel que $F_n = b_1.D_{n-1} + b_2.D_{n-2} +...+ b_p.D_{n-p}$, $p$ étant le nombre d'échantillons utilisés pour calculer le signal vibratoire temporel déterministe amélioré $F_n$ et les coefficients $b_1, b_2...b_p$ étant déterminés afin que l'indicateur de *Kurtosis,* quantifiant l'impulsivité du signal vibratoire temporel déterministe amélioré $F_n$, soit maximum. Cet indicateur de *Kurtosis* est selon la formule

$$Kurtosis(F_n) = \frac{1}{N} \frac{\sum_{n=1}^{N} \left(F_n - \frac{1}{N}\sum_{n=1}^{N} F_n\right)^4}{\sigma_F^{\,4}},$$

$\sigma_F$ étant l'écart type du signal vibratoire déterministe amélioré $F_n$. Là encore, le nombre d'échantillons $p$ peut être inférieur à $n$ afin de réduire le nombre d'échantillons passés utilisés pour déterminer le signal vibratoire temporel déterministe amélioré $F_n$ de manière à obtenir un compromis entre la vitesse et la précision de ce calcul.

Pour obtenir le signal vibratoire temporel aléatoire amélioré $G_n$, une opération intermédiaire est nécessaire. En effet, il faut dans un premier temps appliquer une transformation spécifique au signal vibratoire temporel aléatoire $E_n$ afin d'obtenir un signal intermédiaire $E'_n$ tel que $E_n' = | E_n + i \times H(E_n)|^2$, $H$ étant la transformation de Hilbert et $i$ le nombre imaginaire tel que $i^2 = -1$. Puis dans un second temps, on détermine le signal vibratoire temporel aléatoire amélioré $G_n$ qui est une combinaison linéaire des échantillons précédents du signal intermédiaire $E'_n$ telle que $G_n = c_1.E'_{n-1} + c_2.E'_{n-2} +...+ c_q.E'_{n-q}$, $q$ étant le nombre d'échantillons utilisés pour calculer le signal vibratoire temporel déterministe amélioré $G_n$ et inférieur à $n$. Les coefficients $c_1, c_2...c_q$ sont déterminés afin que l'indicateur de *Kurtosis*

$$Kurtosis(G_n) = \frac{1}{N} \frac{\sum_{n=1}^{N} \left(G_n - \frac{1}{N}\sum_{n=1}^{N} G_n\right)^4}{\sigma_G^{\,4}},$$

soit maximum. Cet indicateur de *Kurtosis* est selon la formule
$\sigma_G$ étant l'écart type du signal vibratoire temporel aléatoire amélioré $G_n$.

On obtient ainsi, à partir du signal vibratoire temporel $A_n$ contenant des informations parasites, un signal vibratoire temporel déterministe amélioré $F_n$ et un signal vibratoire temporel aléatoire amélioré $G_n$ qui ont été filtrés et dont les amplitudes associées aux fréquences pouvant représenter des défauts ont été amplifiées. Ces signaux vibratoires temporels améliorés $F_n$, $G_n$ sont donc prêts à être analysés.

Ensuite, lors de l'étape d'analyse, on détermine respectivement pour chaque signal vibratoire temporel déterministe et chaque signal vibratoire temporel aléatoire au moins une fréquence de présence d'un défaut $\hat{\alpha}$ correspondant à une probabilité maximale de présence d'un défaut pour chaque élément du roulement et un niveau de fiabilité $p(\hat{a})$ associé.

Afin de déterminer chaque fréquence de présence d'un défaut $\hat{\alpha}$, il est plus intéressant de traiter un signal fréquentiel qu'un signal temporel. De fait, on transforme chaque signal vibratoire temporel déterministe et aléatoire respectivement en un signal vibratoire fréquentiel déterministe $J_n$ et un signal vibratoire fréquentiel aléatoire $K_n$ afin d'obtenir pour chaque signal vibratoire fréquentiel $J_n$, $K_n$ et chaque élément du roulement des raies spectrales d'amplitude $S(f)$. Cette transformation est par exemple réalisée par l'utilisation de la transformation de Fourier.

On calcule ensuite pour chaque élément du roulement, pour chaque signal vibratoire fréquentiel $J_n$, $K_n$ et pour chaque fréquence $f$ de l'intervalle $\lfloor \alpha^{th} - \Delta f;\ \alpha^{th} + \Delta f \rfloor$ une probabilité expérimentale $p^{post}(f)$ de présence d'un défaut sur cet élément.

Cette probabilité expérimentale $p^{post}(f)$, qui est déterminée à partir du signal vibratoire temporel $A_n$, peut être également désignée « probabilité à postériori ». Sa valeur est comprise entre 0 et 1.

Enfin, on peut déterminer pour chaque élément et pour chaque signal vibratoire fréquentiel $J_n$, $K_n$ d'une part la fréquence de présence d'un défaut $\hat{\alpha}$ pour laquelle la probabilité expérimentale $p^{post}(f)$ est maximale quand $f$ parcourt l'intervalle $\lfloor \alpha^{th} - \Delta f;\ \alpha^{th} + \Delta f \rfloor$ et d'autre part le niveau de fiabilité $p(\hat{a})$ associé qui est égal à cette probabilité expérimentale $p^{post}(f)$ maximale.

La probabilité expérimentale $p^{post}(f)$ peut être calculée selon la formule

$$p^{post}(f) = \frac{p^{prior}(f) \times \prod_{m=1}^{M} S_m(f)}{\int_{v=\alpha^{th}+\Delta f}^{\alpha^{th}+\Delta f} \left[ p^{prior}(v) \times \prod_{m=1}^{M} S_m(v) \right] dv}$$

où $p^{prior}(f)$ est la probabilité fondamentale théorique de la fréquence $f$ de l'intervalle $\lfloor \alpha^{th} - \Delta f;\ \alpha^{th} + \Delta f \rfloor$, $\Delta f$ la dispersion de fréquence autour de la fréquence fondamentale théorique $\alpha^{th}$, $S_m(f)$ l'amplitude de la raie spectrale pour la fréquence $mxf$ telle que $S_m(f)=S(m \times f)$ et $M$ le nombre d'harmoniques de $f$ prises en compte dans la formule.

Selon une première variante de l'invention, la probabilité expérimentale $p^{post}(f)$ peut être calculée selon la formule

$$p^{post}(f) = \frac{p^{prior}(f) + \sum_{m=1}^{M} S_m(f)}{\int_{v=\alpha^{th}+\Delta f}^{\alpha^{th}+\Delta f} \left[ p^{prior}(v) + \sum_{m=1}^{M} S_m(v) \right] dv}.$$

Selon une seconde variante de l'invention, la probabilité expérimentale $p^{post}(f)$ peut être calculée selon la formule

$$p^{post}(f) = \frac{min_{m=1\ à\ M}\ p^{prior}(f) \times S_m(f)}{\int_{v=\alpha^{th}+\Delta f}^{\alpha^{th}+\Delta f} min_{m=1\ à\ M} \left[ p^{prior}(v) \times S_m(v) \right] dv}.$$

Enfin, lors de l'étape de diagnostic, on délivre éventuellement un message d'alerte signalant au moins un défaut sur au moins un élément du roulement en fonction des valeurs de chaque fréquence de présence d'un défaut $\hat{\alpha}$ et de chaque niveau de fiabilité $p(\hat{a})$ associé.

Avantageusement, ce message d'alerte permet d'identifier le défaut détecté et l'élément concerné, chaque fréquence de présence d'un défaut $\hat{\alpha}$ étant spécifique à un défaut donné et à un élément particulier du roulement.

Dans ce but et pour chaque élément du roulement, les informations relatives à chaque signal vibratoire temporel déterministe et aléatoire obtenu au cours de l'étape de prétraitement, c'est à dire chaque fréquence de présence d'un défaut $\hat{\alpha}$ et chaque niveau de fiabilité $p(\hat{\alpha})$ associé sont rassemblées afin d'être combinées.

Ce diagnostic est une opération permettant de décider du déclenchement ou non d'une alerte signalant un défaut sur au moins un élément du roulement à partir de l'analyse des deux fréquences de présence d'un défaut $\hat{\alpha}$ et de leur niveau de fiabilité $p(\hat{\alpha})$ associé. Plusieurs cas peuvent être distingués.

Par exemple, pour un défaut donné d'un élément du roulement, si les deux fréquences de présence d'un défaut $\hat{\alpha}$ du signal vibratoire temporel déterministe et du signal vibratoire temporel aléatoire sont éloignées, on distingue au moins trois cas :

- soit au moins une des deux fréquences de présence d'un défaut $\hat{\alpha}$ a un niveau de fiabilité $p(\hat{\alpha})$ faible devant l'autre et dans ce cas, on ne tient compte que de la fréquence au niveau de fiabilité $p(\hat{\alpha})$ le plus important pour déclencher éventuellement un message d'alerte correspondant à cette fréquence de présence d'un défaut $\hat{\alpha}$,

- soit les deux fréquences de présence d'un défaut $\hat{\alpha}$ ont un haut niveau de fiabilité $p(\hat{\alpha})$ et dans ce cas, un message d'alerte est éventuellement déclenché suivant une stratégie de maintenance décidée par l'utilisateur, par exemple en combinant les deux niveaux de fiabilité $p(\hat{\alpha})$. La stratégie « minimax » qui consiste à minimiser la perte maximum, c'est-à-dire à se positionner dans le pire des cas, peut être utilisée. Elle consiste dans le cadre de l'invention à prendre la valeur maximale des niveaux de fiabilité $p(\hat{\alpha})$, c'est-à-dire qu'on envisage le pire des défauts possibles,

- soit les deux niveaux de fiabilité $p(\hat{\alpha})$ sont faibles et aucun message d'alerte n'est déclenché.

Dans le cas contraire où les deux fréquences de présence d'un défaut $\hat{\alpha}$ sont proches, on effectue une combinaison des deux niveaux de fiabilité $p(\hat{\alpha})$. Par exemple, une telle combinaison peut donner pour résultat la valeur maximale ou bien la moyenne des niveaux de fiabilité $p(\hat{\alpha})$.

Dans tous les cas, le seul niveau de fiabilité $p(\hat{\alpha})$ retenu ou la combinaison des deux niveaux de fiabilité $p(\hat{\alpha})$ sont comparés à un seuil d'alerte correspondant à ce défaut donné d'un élément du roulement et un message d'alerte correspondant à la présence de ce défaut donné est délivré en cas de dépassement de ce seuil d'alerte.

Les seuils d'alerte de chaque défaut et de chaque élément sont déterminés par l'homme du métier en fonction d'un grand nombre d'états de référence d'un roulement sain et dégradé. Les seuils d'alerte peuvent également prendre en compte des taux de non-détection et de fausses alarmes souhaités.

De fait, la mise en place du procédé selon l'invention nécessite la connaissance d'états de référence multiples d'un roulement sain et d'un roulement dégradé afin de couvrir un nombre important de paramètres tels que le chargement statique et dynamique du roulement, différentes vitesses de rotation ainsi que différentes températures de fonctionnement.

L'invention et ses avantages apparaîtront avec plus de détails dans le cadre de la description qui suit avec des exemples de réalisation donnés à titre illustratif en référence aux figures annexées qui représentent :

- la figure 1, un schéma synoptique du procédé selon l'invention,

- la figure 2, une vue éclatée d'un roulement,

- la figure 3, une courbe représentant la probabilité fondamentale théorique $p^{prior}(f)$ selon la fréquence $f$, et

- les figures 4 à 6, différents courbes représentant différents signaux vibratoires au cours du procédé selon l'invention.

Les éléments présents dans plusieurs figures distinctes sont affectés d'une seule et même référence.

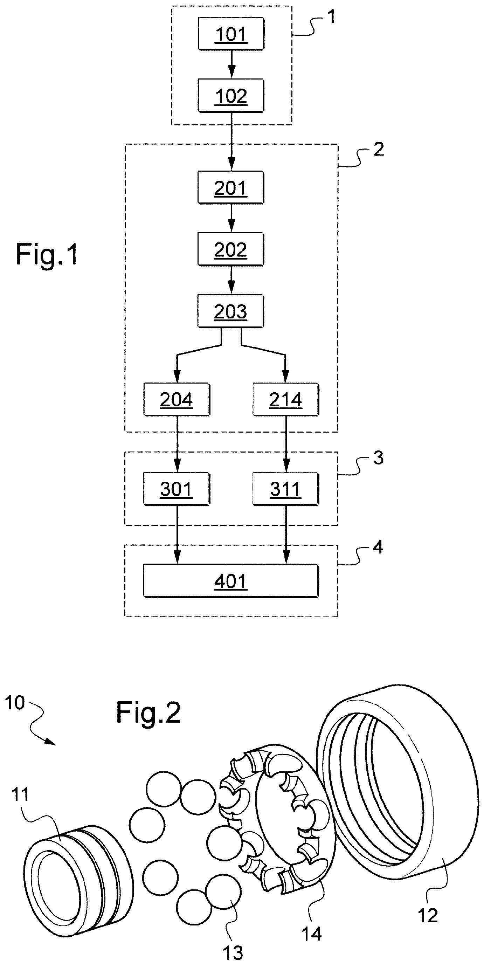

La figure 1 présente un schéma synoptique du procédé selon l'invention se déroulant selon quatre étapes principales, chacune de ces étapes principales comportant une ou plusieurs sous-étapes. Ce procédé concerne un procédé de détection de défauts d'un roulement 10 par analyse vibratoire.

Une vue éclatée d'un tel roulement 10 est représentée sur la figure 2. Ce roulement 10 comporte plusieurs éléments, dont une bague intérieure 11, une bague extérieure 12 et une pluralité de billes 13. Il peut également comporter une cage 14 assurant un espacement constant entre chaque bille 13. De fait, les billes 13 peuvent rouler entre la bague intérieure 11 et la bague extérieure 12. Cependant, les billes 13 peuvent être remplacées par tous types de corps roulants, par exemple par des rouleaux cylindriques ou coniques ainsi que par des tonneaux.

Ce roulement 10 fait généralement partie d'un dispositif de guidage d'un composant en rotation, tel un arbre transmettant un mouvement de rotation et un couple. Ce dispositif de guidage est lui-même intégré à un système, tel un moteur thermique.

Tout d'abord, lors d'une étape préliminaire 1, on détermine pour chaque élément 11,12,13 du roulement 10, au cours d'une première sous-étape 101, au moins une fréquence fondamentale théorique $\alpha^{th}$ correspondant à un défaut de cet élément 11,12,13, cette fréquence fondamentale théorique $\alpha^{th}$ étant dépendante principalement de la géométrie de cet élément 11,12,13 et de sa vitesse de rotation. Cependant, il peut exister une différence entre cette fréquence fondamentale théorique $\alpha^{th}$ et la fréquence de présence d'un défaut $\hat{\alpha}$. On détermine alors, au cours d'une seconde sous-étape 102, une dispersion de fréquence $\Delta f$ autour de cette fréquence fondamentale théorique $\alpha^{th}$ ainsi qu'une probabilité fondamentale théorique $p^{prior}(f)$ que chaque fréquence $f$ de l'intervalle $\llcorner \alpha^{th} - \Delta f; \alpha^{th} + \Delta f \lrcorner$ corresponde réellement à ce défaut de cet élément 11,12,13. La valeur de cette probabilité fondamentale théorique $p^{prior}(f)$ est comprise entre 0 et 1.

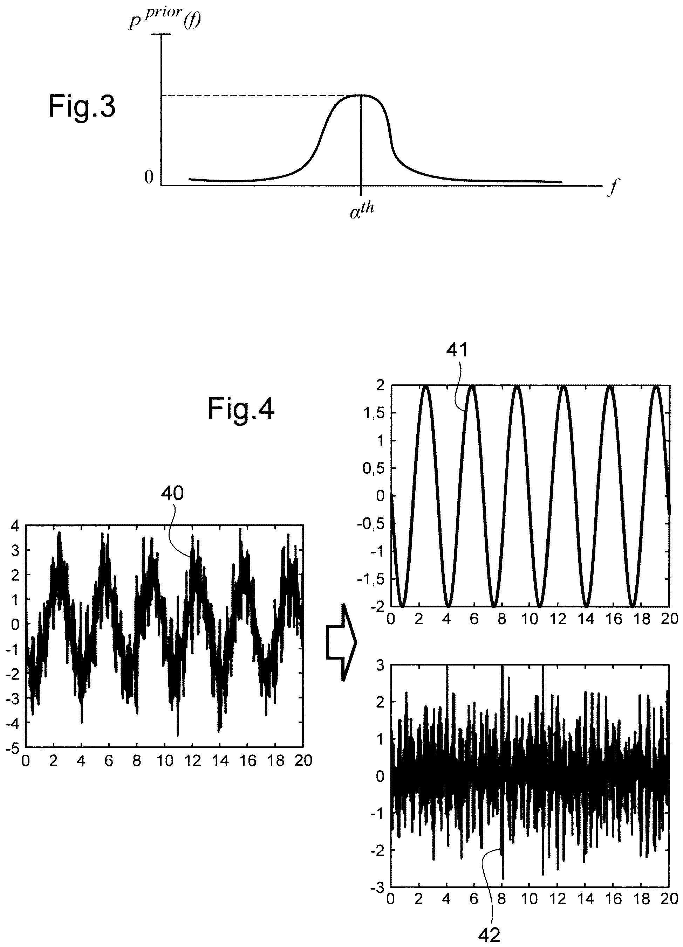

La dispersion de fréquence $\Delta f$ et la probabilité fondamentale théorique $p^{prior}(f)$ peuvent être obtenues par l'expérience, par exemple suite à des mesures effectuées sur des roulements comportant ce défaut. On peut alors obtenir une courbe semblable à celle représentée sur la figure 3, sur laquelle sont situées la fréquence en abscisse et la probabilité fondamentale théorique $p^{prior}(f)$ en ordonnée.

Cette étape préliminaire 1 est réalisée une fois avant la mise en route du système contenant le roulement 10 surveillé par le procédé selon l'invention et n'est pas effectuée à chaque cycle du procédé, contrairement aux étapes suivantes.

Lors d'une étape de prétraitement 2, on acquiert, au cours d'une troisième sous-étape 201, un signal vibratoire temporel $A_n$ émis par un capteur d'accélération positionné à proximité du roulement 10. Ce signal vibratoire temporel $A_n$ est acquis pendant un temps d'acquisition prédéterminé et comprend un nombre d'échantillons $N$, $n$ étant le numéro d'ordre de chaque échantillon de ce signal et variant de 1 à $N$. Ce signal vibratoire temporel $A_n$ comprend donc des informations sur les vibrations émises par le roulement 10 et plus particulièrement par ses éléments 11,12,13 ainsi que des informations parasites extérieures au roulement 10.

Ce temps d'acquisition prédéterminé peut être par exemple de l'ordre de cinquante périodes théoriques d'un signal vibratoire correspondant à un défaut sur le roulement 10, une période théorique d'un signal vibratoire étant l'inverse d'une fréquence fondamentale théorique $\alpha^{th}$ de ce signal vibratoire. Ce temps d'acquisition peut représenter une durée de l'ordre de trois secondes.

Au cours d'une quatrième sous-étape 202 de cette étape de prétraitement 2, on filtre alors ce signal vibratoire temporel $A_n$ afin de supprimer ces informations parasites. Ces informations parasites comportent d'une part des vibrations émises par d'autres composants du système dont fait partie le roulement 10 et dont les fréquences vibratoires sont généralement connues, donc facilement identifiables dans le signal vibratoire temporel $A_n$, et par suite supprimables, et d'autre part des vibrations extérieures au système et dont les fréquences vibratoires sont inconnues. Pour supprimer ces fréquences parasites inconnues, il importe de supprimer les fréquences éloignées de chaque fréquence fondamentale théorique $\alpha^{th}$ et de ses harmoniques. En effet, la fréquence de présence d'un défaut $\hat{\alpha}$ se trouve dans l'intervalle $\llcorner \alpha^{th} - \Delta f; \alpha^{th} + \Delta f \lrcorner$ autour de chaque fréquence fondamentale théorique $\alpha^{th}$. On peut donc en déduire que toute fréquence du signal vibratoire temporel $A_n$ se trouvant éloignées de chaque fréquence fondamentale théorique $\alpha^{th}$ et de ses harmoniques d'une valeur supérieure à la dispersion de fréquence $\Delta f$ associée ne peut pas être la fréquence de présence d'un défaut $\hat{\alpha}$ et doit donc être supprimée.

Au cours de cette quatrième sous-étape 202, il est également possible de synchroniser le signal vibratoire temporel $A_n$ avec le régime de rotation de l'arbre auquel est lié le roulement 10. En effet, ce régime de rotation de l'arbre peut varier pendant le temps d'acquisition prédéterminé du signal vibratoire temporel $A_n$, et ainsi perturber ce signal vibratoire temporel $A_n$. Il est par contre possible de corriger ce signal vibratoire temporel $A_n$ en utilisant la vitesse instantanée de rotation de cet arbre et de supprimer alors cette perturbation.

Après cette quatrième sous-étape 202 de filtration du signal vibratoire temporel $A_n$, on obtient le signal vibratoire temporel filtré $A'_n$ qu'il reste à transformer en vue de son analyse.

Dans ce but, on décompose au cours d'une cinquième sous-étape 203 le signal vibratoire temporel filtré $A'_n$ en deux signaux, un signal vibratoire temporel déterministe $D_n$ et un signal vibratoire temporel aléatoire $E_n$.

Par définition, un signal est déterministe si toutes ses valeurs futures sont prédictibles avec ses valeurs passées. De fait, on peut écrire ce signal vibratoire temporel déterministe $D_n$ sous la forme $D_n = a_1.A'_{n-1} + a_2.A'_{n-2} + ... + a_r.A'_{n-r}$, $a_1, a_2...a_r$ étant des coefficients déterminés selon la méthode connue des moindres carrés, c'est-à-dire afin que la somme

$$\sum_{n=N-r}^{N} \left( A'_n - D_n \right)^2$$

soit minimale. De plus, le nombre $r$ d'échantillons passés utilisés pour déterminer ce signal vibratoire temporel déterministe $D_n$ peut être réduit afin d'obtenir un compromis entre la vitesse et la précision du calcul vibratoire temporel déterministe. De fait, le nombre $r$ est inférieur à $n$.

Le signal vibratoire temporel aléatoire $E_n$ est pour sa part la différence entre le signal vibratoire temporel filtré $A'_n$ et le signal vibratoire temporel déterministe $D_n$ tel que $E_n = A'_n - D_n$.

La figure 4 représente la décomposition d'un signal quelconque 40 en un signal déterministe 41, qui est périodique dans ce cas particulier, et un signal aléatoire 42. Les trois graphes de cette figure 4 représentent l'amplitude de chaque signal en fonction du temps.

On peut alors terminer cette étape de prétraitement 2 et utiliser ces signaux vibratoires temporels déterministes $D_n$ et aléatoires $E_n$ dans l'étape d'analyse 3.

Cependant, pour améliorer l'analyse des signaux vibratoires, on peut également améliorer l'impulsivité des signaux vibratoires temporels déterministe $D_n$ et aléatoire $E_n$.

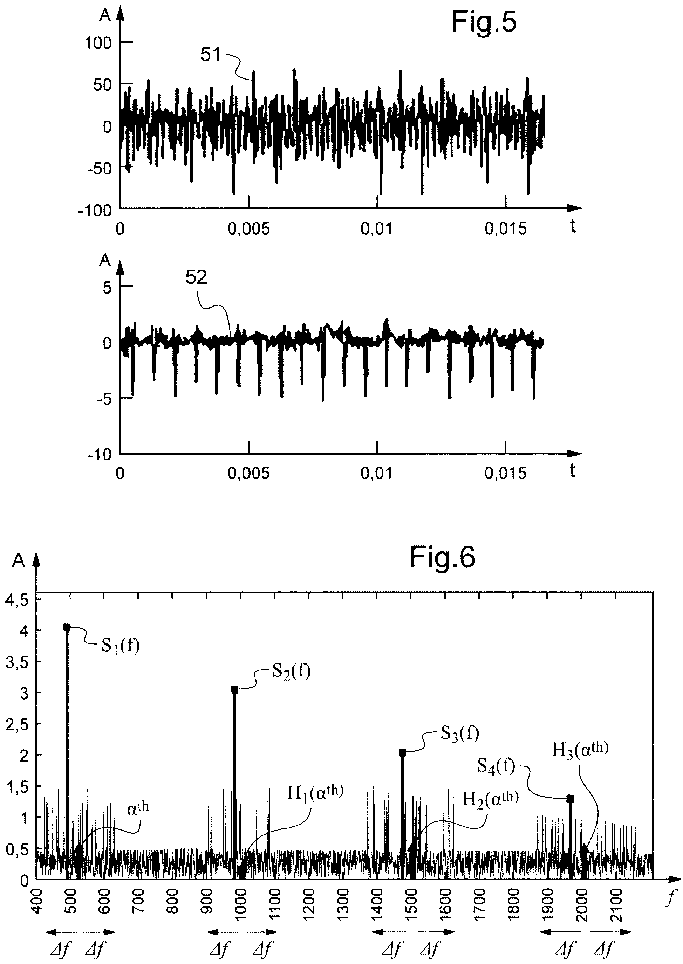

En effet, un défaut sur un roulement entraîne notamment des chocs répétés qui se traduisent sur chaque signal vibratoire, par des pics de grandes amplitudes. La présence de pics d'amplitudes élevées est une caractéristique appelée impulsivité, qui est quantifiée par un indicateur appelé indicateur de *Kurtosis.* En amplifiant plus particulièrement ces pics, on peut alors mettre en évidence la présence de ces pics sur le signal vibratoire temporel $A_n$. La figure 5 montre un signal quelconque 51 dont l'impulsivité a été améliorée pour obtenir le signal 52. On constate que les pics du signal quelconque 51 apparaissent de façon plus nette sur le signal 52. Les deux graphes de la figure 5 représentent l'amplitude de chaque signal en fonction du temps.

Le signal vibratoire temporel déterministe $D_n$ est ainsi transformé, au cours d'une sixième sous-étape 204, en un signal vibratoire temporel déterministe amélioré $F_n$ qui est une combinaison linéaire des valeurs des échantillons précédents du signal vibratoire temporel déterministe $D_n$ tel que $F_n = b_1.D_{n-1} + b_2.D_{n-2} +...+ b_p.D_{n-p}$, avec $p$ le nombre d'échantillons utilisés pour le calcul et les coefficients $b_1$, $b_2...b_p$ tels que l'indicateur de *Kurtosis,* selon la formule

$$Kurtosis(F_n) = \frac{1}{N} \frac{\sum_{n=1}^{N} \left( F_n - \frac{1}{N} \sum_{n=1}^{N} F_n \right)^4}{\sigma_F^4},$$

soit maximum, $\sigma_F$ étant l'écart type du signal vibratoire déterministe amélioré $F_n$.

Le signal vibratoire temporel aléatoire $E_n$ est transformé pour sa part au cours d'une septième sous-étape 214, en un signal vibratoire temporel aléatoire amélioré $G_n$. Une opération intermédiaire est nécessaire afin de déterminer un signal intermédiaire $E'_n$ tel que $E_n'= |E_n + i \times H(E_n)|^2$, $H$ étant la transformation de Hilbert et $i$ le nombre imaginaire tel que $i^2 = -1$. Puis, on détermine le signal vibratoire temporel aléatoire amélioré $G_n$ qui est une combinaison linéaire des valeurs des échantillons précédents du signal intermédiaire $E'_n$ tel que $G_n = c_1.E'_{n-1} + c_2.E'_{n-2} +...+ c_q.E'_{n-q}$, avec $q$ le nombre d'échantillons utilisés pour le calcul et les coefficients $c_1$, $c_2...c_q$ tel que l'indicateur de *Kurtosis,* selon la

$$Kurtosis(G_n) = \frac{1}{N} \frac{\sum_{n=1}^{N} \left( G_n - \frac{1}{N} \sum_{n=1}^{N} G_n \right)^4}{\sigma_G^4},$$

formule soit maximum, $\sigma_G$ étant l'écart type du signal vibratoire temporel aléatoire amélioré $G_n$.

On obtient ainsi, à partir du signal vibratoire temporel $A_n$ contenant des informations parasites, un signal vibratoire temporel déterministe amélioré $F_n$ et un signal vibratoire temporel aléatoire amélioré $G_n$ qui ont été filtrés et dont les fréquences pouvant présenter des défauts ont été amplifiées. Ces signaux vibratoires temporels améliorés $F_n$, $G_n$ sont donc prêts à être utilisés dans l'étape d'analyse 3.

Lors de cette étape d'analyse 3, on peut déterminer pour chaque élément 11,12,13 du roulement 10 et pour le signal vibratoire temporel déterministe et le signal vibratoire temporel aléatoire obtenus à la fin de l'étape de prétraitement 2 au moins une fréquence de présence d'un défaut $\hat{\alpha}$ et un niveau de fiabilité $p(\hat{\alpha})$ associé, chaque fréquence de présence d'un défaut $\hat{\alpha}$ se trouvant dans l'intervalle $\llcorner \alpha^{th} - \Delta f;\ \alpha^{th} + \Delta f \lrcorner$ correspondant à un défaut de fréquence fondamentale théorique $\alpha^{th}$.

Ainsi, on détermine chaque fréquence de présence d'un défaut $\hat{\alpha}$ et chaque niveau de fiabilité $p(\hat{\alpha})$ associé au cours d'une huitième sous-étape 301 à partir du signal vibratoire temporel déterministe et au cours d'une neuvième sous-étape 311 à partir du signal vibratoire temporel aléatoire.

Afin de déterminer chaque fréquence de présence d'un défaut $\hat{\alpha}$, il est intéressant de traiter un signal fréquentiel plutôt qu'un signal temporel. On transforme donc chaque signal vibratoire temporel amélioré déterministe et aléatoire respectivement en un signal vibratoire fréquentiel déterministe $J_n$ et un signal vibratoire fréquentiel aléatoire $K_n$ selon une méthode connue telle que la transformation de Fourier. On obtient ainsi pour chaque signal vibratoire fréquentiel $J_n$, $K_n$ et chaque élément 11,12,13 du roulement 10, des raies spectrales d'amplitude $S(f)$. Un tel signal fréquentiel est représenté sur la figure 6, la fréquence du signal étant en abscisse et l'amplitude en ordonnée. On distingue clairement les pics $S_1(f)$, $S_2(f)$, $S_3(f)$, $S_4(f)$. Le premier pic $S_1(f)$ se trouve à une fréquence proche d'une fréquence fondamentale théorique $\alpha^{th}$, dans l'intervalle $\llcorner \alpha^{th} - \Delta f;\ \alpha^{th} + \Delta f \lrcorner$ et pourrait correspondre à la présence d'un défaut sur l'élément 11,12,13 correspondant. De même, les pics suivants $S_2(f)$, $S_3(f)$, $S_4(f)$ se trouvent respectivement proches des harmoniques $H_1(\alpha^{th})$, $H_2(\alpha^{th})$, $H_3(\alpha^{th})$ de cette fréquence fondamentale théorique $\alpha^{th}$.

On peut ensuite calculer pour chaque signal vibratoire fréquentiel $J_n$, $K_n$ et pour chaque fréquence $f$ de l'intervalle $\llcorner \alpha^{th} - \Delta f;\ \alpha^{th} + \Delta f \lrcorner$ une probabilité expérimentale $p^{post}(f)$ de présence d'un défaut sur chaque élément 11,12,13 du roulement 10.

Cette probabilité expérimentale $p^{post}(f)$, comprise entre 0 et 1, peut être calculée selon la formule

$$p^{post}(f) = \frac{p^{prior}(f) \times \prod_{m=1}^{M} S_m(f)}{\int_{v=\alpha^{th}+\Delta f}^{\alpha^{th}+\Delta f} \left[ p^{prior}(v) \times \prod_{m=1}^{M} S_m(v) \right] dv}$$

où $p^{prior}(f)$ est la probabilité fondamentale théorique de la fréquence $f$ de l'intervalle $\llcorner \alpha^{th} - \Delta f;\ \alpha^{th} + \Delta f \lrcorner$, $\Delta f$ la dispersion de fréquence autour de la fréquence fondamentale théorique

$\alpha^{th}$, $S_m(f)$ l'amplitude de la raie spectrale pour la fréquence *mxf* telle que $S_m(f)=S(mxf)$ et $M$ le nombre d'harmoniques de *f* prises en compte dans la formule.

On peut également calculer cette probabilité expérimentale $p^{post}(f)$ selon la formule

$$p^{post}(f) = \frac{p^{prior}(f) + \sum_{m=1}^{M} S_m(f)}{\int_{v=\alpha^{th}+\Delta f}^{\alpha^{th}+\Delta f} \left[ p^{prior}(v) + \sum_{mn=1}^{M} S_m(v) \right] dv}$$

ou bien selon la formule

$$p^{post}(f) = \frac{min_{m=1 \, à \, M} \; p^{prior}(f) \times S_m(f)}{\int_{v=\alpha^{th}+\Delta f}^{\alpha^{th}+\Delta f} min_{m=1 \, à \, M} \left[ p^{prior}(v) \times S_m(v) \right] dv} .$$

On peut déterminer ensuite pour chaque élément 11,12,13 et pour chaque signal vibratoire fréquentiel $J_n$, $K_n$ chaque fréquence de présence d'un défaut $\hat{\alpha}$ pour laquelle la probabilité expérimentale $p^{post}(f)$ est maximale quand *f* parcourt l'intervalle L$\alpha^{th}$ - $\Delta f$; $\alpha^{th}$ + $\Delta f$J, chaque niveau de fiabilité $p(\hat{\alpha})$ associé étant égal à cette probabilité expérimentale $p^{post}(f)$ maximale.

Enfin, lors de l'étape de diagnostic 4, qui ne comprend qu'une seule dixième sous-étape 401, on délivre éventuellement un message d'alerte signalant au moins un défaut sur au moins un élément 11,12,13 du roulement 10 en fonction des valeurs de chaque fréquence de présence d'un défaut $\hat{\alpha}$ et chaque niveau de fiabilité $p(\hat{\alpha})$ associé.

Avantageusement, ce message d'alerte permet d'identifier le défaut détecté et l'élément 11,12,13 concerné, chaque fréquence de présence d'un défaut $\hat{\alpha}$ étant spécifique à un défaut donné et à un élément 11,12,13 particulier sur le roulement 10.

Par exemple, si les deux fréquences de présence d'un défaut $\hat{\alpha}$ du signal vibratoire temporel déterministe $D_n$ et du signal vibratoire temporel aléatoire $E_n$ sont éloignées, on distingue au moins trois cas :

- soit au moins une des deux fréquences de présence d'un défaut $\hat{\alpha}$ a un niveau de fiabilité $p(\hat{\alpha})$ faible devant l'autre et dans ce cas, on ne tient compte que de la fréquence de présence d'un défaut $\hat{\alpha}$ à fort niveau de fiabilité $p(\hat{\alpha})$ et de ce fort niveau de fiabilité $p(\hat{\alpha})$ pour déclencher éventuellement un message d'alerte,

- soit les deux fréquences de présence d'un défaut $\hat{\alpha}$ ont un haut niveau de fiabilité $p(\hat{\alpha})$ et dans ce cas, un message d'alerte est éventuellement déclenché suivant la stratégie de maintenance décidée par l'utilisateur, par exemple en combinant les deux niveaux de fiabilité $p(\hat{\alpha})$,

- soit les deux niveaux de fiabilité $p(\hat{\alpha})$ sont faibles et aucun message d'alerte n'est déclenché.

Dans le cas contraire où les deux fréquences de présence d'un défaut $\hat{\alpha}$ sont proches, on effectue une combinaison des deux niveaux de fiabilité $p(\hat{\alpha})$.

Dans tous les cas, le seul niveau de fiabilité $p(\hat{\alpha})$ retenu ou la combinaison des deux niveaux de fiabilité $p(\hat{\alpha})$ sont comparés à un seuil d'alerte et s'il y a dépassement de ce seuil d'alerte, un message d'alerte correspondant à la présence d'un défaut sur l'élément 11,12,13 considéré est délivré.

Les seuils d'alerte de chaque élément 11,12,13 sont déterminés par l'homme du métier en fonction d'un grand nombre d'états de référence d'un roulement 10 sain ou dégradé.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, la présente invention étant définie par les revendications.

## Revendications

1. Procédé de détection de défauts d'un roulement (10), ledit roulement (10) comportant au moins les éléments suivants :

   - une bague intérieure (11),
   - une bague extérieure (12) et
   - une pluralité de corps roulants (13) roulant entre ladite bague intérieure (11) et ladite bague extérieure (12), au cours duquel

- lors d'une étape préliminaire (1),

○ on détermine pour chaque élément (11,12,13) dudit roulement (10) au moins une fréquence fondamentale théorique $\alpha^{th}$ correspondant à un défaut de cet élément (11,12,13) et

○ on détermine pour ledit défaut de cet élément (11,12,13) une dispersion de fréquence $\Delta f$ permettant de définir un intervalle $\llcorner \alpha^{th} - \Delta f;\ \alpha^{th} + \Delta f \lrcorner$ autour de ladite fréquence fondamentale théorique $\alpha^{th}$ ainsi qu'une probabilité fondamentale théorique $p^{prior}(f)$ que chaque fréquence $f$ dudit intervalle $\llcorner \alpha^{th} - \Delta f;\ \alpha^{th} + \Delta f \lrcorner$ corresponde audit défaut de cet élément (11,12,13),

- lors d'une étape de prétraitement (2),

○ on acquiert un signal vibratoire temporel $A_n$ émis par un capteur d'accélération positionné à proximité dudit roulement (10) et comprenant un nombre d'échantillons $N$ sur un temps d'acquisition prédéterminé, $n$ étant le numéro d'ordre de chaque échantillon variant de 1 à $N$, et

○ on transforme ledit signal vibratoire temporel $A_n$ en vue de son analyse,

- lors d'une étape d'analyse (3),
○ on détermine pour chaque élément (11,12,13) au moins une fréquence de présence d'un défaut $\hat{\alpha}$ sur cet élément (11,12,13) et un niveau de fiabilité $p(\hat{\alpha})$ associé à chaque fréquence de présence d'un défaut $\hat{\alpha}$, ladite fréquence de présence d'un défaut $\hat{\alpha}$ correspondant une fréquence vibratoire caractéristique dudit défaut présent sur un élément (11,12,13) dudit roulement (10) et se trouvant dans ledit intervalle $\llcorner \alpha^{th} - \Delta f;\ \alpha^{th} + \Delta f \lrcorner$ préalablement défini, ledit niveau de fiabilité $p(\hat{\alpha})$ étant la valeur maximale d'une probabilité expérimentale $p^{post}(f)$ de présence d'un défaut $\hat{\alpha}$ sur un élément (11,12,13) dudit roulement (10) et ladite fréquence de présence dudit défaut $\hat{\alpha}$ étant la fréquence dudit intervalle $\llcorner \alpha^{th} - \Delta f;\ \alpha^{th} + \Delta f \lrcorner$ pour laquelle la probabilité expérimentale $p^{post}(f)$ est maximale, ladite probabilité expérimentale $p^{post}(f)$ étant déterminée à partir dudit signal vibratoire temporel $A_n$ et étant fonction de ladite probabilité fondamentale théorique $p^{prior}(f)$,
- lors d'une étape de diagnostic (4),
○ on délivre un message d'alerte signalant au moins un défaut sur au moins un élément (11,12,13) dudit roulement (10) en fonction des valeurs de chaque fréquence de présence d'un défaut $\hat{\alpha}$ et de chaque niveau de fiabilité $p(\hat{\alpha})$ associé.

**2.** Procédé de détection de défauts selon la revendication 1,
**caractérisé en ce que**, lors de ladite étape de prétraitement (2), après acquisition dudit signal vibratoire temporel $A_n$,

○ on filtre ledit signal vibratoire temporel $A_n$ afin d'obtenir un signal vibratoire temporel filtré $A'_n$ et
○ on transforme ledit signal vibratoire temporel filtré $A'_n$ afin d'obtenir un signal vibratoire temporel déterministe et un signal vibratoire temporel aléatoire.

**3.** Procédé de détection de défauts selon la revendication 2,
**caractérisé en ce que** ledit roulement (10) faisant partie d'un système comportant au moins un premier composant en rotation auquel est lié ledit roulement (10), on filtre ledit signal vibratoire temporel $A_n$ en le synchronisant avec une vitesse instantanée de rotation dudit premier composant mesurée par un moyen de mesure de ladite vitesse instantanée de rotation présent dans ledit système.

**4.** Procédé de détection de défauts selon l'une quelconque des revendications 2 à 3,
**caractérisé en ce que** l'on filtre ledit signal vibratoire temporel $A_n$ en supprimant les composantes vibratoires parasites présentes dans ledit signal vibratoire temporel $A_n$.

**5.** Procédé de détection de défauts selon la revendication 4,
**caractérisé en ce que**

- on transforme ledit signal vibratoire temporel $A_n$ en un signal vibratoire fréquentiel $B_n$,
- on supprime dudit signal vibratoire fréquentiel $B_n$ des fréquences vibratoires provenant des composants dudit dispositif extérieurs audit roulement (10), dont lesdites fréquences vibratoires sont connues,
- on supprime dudit signal vibratoire fréquentiel $B_n$ des fréquences vibratoires éloignées de chaque fréquence fondamentale théorique $\alpha^{th}$ de chaque élément (11,12,13) et de ses harmoniques d'une valeur supérieure à ladite dispersion de fréquence $\Delta f$ correspondant à chaque fréquence fondamentale théorique $\alpha^{th}$, et
- on transforme ledit signal vibratoire fréquentiel $B_n$ ainsi modifié pour obtenir un signal vibratoire temporel.

**6.** Procédé de détection de défauts selon l'une quelconque des revendications 2 à 5,
**caractérisé en ce que** l'on décompose ledit signal vibratoire temporel filtré $A'_n$ en deux signaux :

- un signal vibratoire temporel déterministe $D_n$ qui est une combinaison linéaire des valeurs passées dudit signal vibratoire temporel filtré $A'_n$, tel que $D_n = a_1.A'_{n-1} + a_2.A'_{n-2} +...+ a_r.A'_{n-r}$, $a_1$, $a_2...a_r$ étant des coefficients déterminés de sorte que la somme $\sum_{n=N-r}^{N} \left(A'_n - D_n\right)^2$ soit minimale et $r$ étant le nombre d'échantillons utilisés pour calculer ledit signal déterministe et étant inférieur à $n$ et
- un signal vibratoire temporel aléatoire $E_n$, qui est la différence entre ledit signal vibratoire temporel filtré $A'_n$ et ledit signal vibratoire temporel déterministe $D_n$.

**7.** Procédé de détection de défauts selon la revendication 6,
**caractérisé en ce que** l'on améliore l'impulsivité dudit signal vibratoire temporel déterministe $D_n$ pour obtenir un signal vibratoire temporel déterministe amélioré $F_n$ qui est une combinaison linéaire des échantillons précédents dudit signal vibratoire temporel déterministe $D_n$ tel que $F_n = b_1.D_{n-1} + b_2.D_{n-2} +...+ b_p.D_{n-p}$, les coefficients $b_1$, $b_2...b_p$ étant déterminés afin que l'indicateur de *Kurtosis* selon la formule suivante

$$Kurtosis(F_n) = \frac{1}{N} \frac{\sum_{n=1}^{N} \left(F_n - \frac{1}{N}\sum_{n=1}^{N} F_n\right)^4}{\sigma_F^{\,4}}$$

soit maximum, $\sigma_F$ étant l'écart type dudit signal vibratoire temporel déterministe amélioré $F_n$, $p$ étant le nombre d'échantillons utilisés pour calculer ledit signal temporel déterministe amélioré $F_n$ et étant inférieur à $n$, ledit signal vibratoire temporel déterministe amélioré $F_n$ pouvant alors être utilisé lors de ladite étape d'analyse (3).

**8.** Procédé de détection de défauts selon l'une quelconque des revendications 6 à 7,
**caractérisé en ce que** l'on améliore l'impulsivité dudit signal vibratoire temporel aléatoire $E_n$ pour obtenir un signal vibratoire temporel aléatoire amélioré $G_n$ en transformant dans un premier temps le signal vibratoire temporel aléatoire $E_n$ pour obtenir un signal intermédiaire $E'_n$ tel que $E_n' = |E_n + i \times H(E_n)|^2$, $H$ étant la transformation de Hilbert et $i$ le nombre imaginaire tel que $i^2 = -1$, puis un dans un second temps, en déterminant ledit signal vibratoire temporel aléatoire amélioré $G_n$ qui est une combinaison linéaire des échantillons précédents dudit signal intermédiaire $E'_n$ tel que $G_n = c_1.E'_{n-1} + c_2.E'_{n-2} +...+ c_q.E'_{n-q}$, les coefficients $c_1$, $c_2...c_q$ étant déterminés afin que l'indicateur

$$Kurtosis(G_n) = \frac{1}{N} \frac{\sum_{n=1}^{N} \left(G_n - \frac{1}{N}\sum_{n=1}^{N} G_n\right)^4}{\sigma_G^{\,4}}$$

de *Kurtosis* selon la formule suivante soit maximum, $\sigma_G$ étant l'écart type dudit signal vibratoire temporel aléatoire amélioré $G_n$, $q$ étant le nombre d'échantillons utilisés pour calculer ledit signal vibratoire temporel déterministe amélioré $G_n$ et étant inférieur à $n$, ledit signal vibratoire temporel aléatoire amélioré $G_n$ pouvant alors être utilisé lors de ladite étape de d'analyse (3).

**9.** Procédé de détection de défauts selon l'une quelconque des revendications 2 à 8,
**caractérisé en ce que**, lors de ladite étape d'analyse (3),

◦ on transforme ledit signal vibratoire temporel déterministe et ledit signal vibratoire temporel aléatoire respectivement en un signal vibratoire fréquentiel déterministe $J_n$ et un signal vibratoire fréquentiel aléatoire $K_n$ afin d'obtenir pour chaque signal vibratoire fréquentiel $J_n$, $K_n$ et chaque élément (11,12,13) des raies spectrales d'amplitude $S(f)$,
◦ on calcule pour chaque signal vibratoire fréquentiel $J_n$, $K_n$ et pour chaque fréquence $f$ de l'intervalle $\llcorner \alpha^{th} - \Delta f;$ $\alpha^{th} + \Delta f \lrcorner$ ladite probabilité expérimentale $p^{post}(f)$ de présence d'un défaut sur chaque élément (11,12,13), et
◦ on détermine pour chaque élément (11,12,13) et pour chaque signal vibratoire fréquentiel $J_n$, $K_n$ d'une part ladite fréquence de présence d'un défaut $\hat{\alpha}$ correspondant à ladite probabilité expérimentale $p^{post}(f)$ maximale quand $f$ parcourt l'intervalle $\llcorner \alpha^{th} - \Delta f;$ $\alpha^{th} + \Delta f \lrcorner$ et d'autre part ledit niveau de fiabilité $p(\hat{a})$ associé qui est égal à ladite probabilité expérimentale $p^{post}(f)$ maximale.

**EP 2 693 176 B1**

**10.** Procédé de détection de défauts selon la revendication 9, **caractérisé en ce que** ladite probabilité expérimentale

$p^{post}(f)$ est calculée selon la formule 
$$p^{post}(f) = \frac{p^{prior}(f) \times \prod_{m=1}^{M} S_m(f)}{\int_{v=\alpha^{th}+\Delta f}^{\alpha^{th}+\Delta f} \left[ p^{prior}(v) \times \prod_{m=1}^{M} S_m(v) \right] dv}$$
où $\Delta f$ ladite dispersion de fréquence autour de ladite fréquence fondamentale théorique $\alpha^{th}$, $S_m(f)$ ladite amplitude de ladite raie spectrale pour ladite fréquence $mxf$ telle que $S_m(f) = S(mxf)$, $f$ appartenant à l'intervalle $\llcorner\alpha^{th} - \Delta f;\ \alpha^{th} + \Delta f\lrcorner$ et $M$ le nombre d'harmoniques de $f$ prises en compte dans la formule.

**11.** Procédé de détection de défauts selon la revendication 9, **caractérisé en ce que** ladite probabilité expérimentale

$p^{post}(f)$ est calculée selon la formule 
$$p^{post}(f) = \frac{p^{prior}(f) + \sum_{m=1}^{M} S_m(f)}{\int_{v=\alpha^{th}+\Delta f}^{\alpha^{th}+\Delta f} \left[ p^{prior}(v) + \sum_{m=1}^{M} S_m(v) \right] dv}$$
où $\Delta f$ ladite dispersion de fréquence autour de ladite fréquence fondamentale théorique $\alpha^{th}$, $S_m(f)$ ladite amplitude de ladite raie spectrale pour ladite fréquence $mxf$ telle que $S_m(f) = S(mxf)$, $f$ appartenant à l'intervalle $\llcorner\alpha^{th} - \Delta f;\ \alpha^{th} + \Delta f\lrcorner$ et $M$ le nombre d'harmoniques de $f$ prises en compte dans la formule.

**12.** Procédé de détection de défauts selon la revendication 9, caractérisé en ce ladite probabilité expérimentale $p^{post}(f)$

est calculée selon la formule 
$$p^{post}(f) = \frac{min_{m=1\ à\ M}\ p^{prior}(f) \times S_m(f)}{\int_{v=\alpha^{th}+\Delta f}^{\alpha^{th}+\Delta f} min_{m=1\ à\ M} \left[ p^{prior}(v) \times S_m(v) \right] dv}$$
où $\Delta f$ ladite dispersion de fréquence autour de ladite fréquence fondamentale théorique $\alpha^{th}$, $S_m(f)$ ladite amplitude de ladite raie spectrale pour ladite fréquence $mxf$ telle que $S_m(f) = S(mxf)$, $f$ appartenant à l'intervalle $\llcorner\alpha^{th} - \Delta f;\ \alpha^{th} + \Delta f\lrcorner$ et $M$ le nombre d'harmoniques de $f$ prises en compte dans la formule.

**13.** Procédé de détection de défauts selon l'une quelconque des revendications 1 à 12,
**caractérisé en ce que**, lors de ladite étape de diagnostic (4), lorsque pour ledit défaut de cet élément (11,12,13) lesdites fréquences expérimentales de défaut $\hat{\alpha}$ sont éloignées l'une de l'autre,

   - si lesdits niveaux de fiabilité $p(\hat{\alpha})$ respectifs sont faibles, on ne délivre aucun message d'alerte signalant un défaut sur cet élément (11,12,13),
   - si lesdits niveaux de fiabilité $p(\hat{\alpha})$ respectifs sont élevés, on combine les valeurs de chaque niveau de fiabilité $p(\hat{\alpha})$ selon une première loi prédéterminée et on délivre un message d'alerte signalant ledit défaut si le résultat de ladite combinaison est supérieur à un seuil d'alerte prédéterminé, et
   - si un niveau de fiabilité $p(\hat{\alpha})$ d'une desdites deux fréquences expérimentales de défaut $\hat{\alpha}$ est faible par rapport à l'autre, on délivre un message d'alerte signalant ledit défaut uniquement pour ladite fréquence de présence d'un défaut $\hat{\alpha}$ en fonction dudit niveau de fiabilité $p(\hat{\alpha})$ associé.

**14.** Procédé de détection de défauts selon l'une quelconque des revendications 1 à 13,
**caractérisé en ce que**, lors d'une étape de diagnostic (4), si pour ledit défaut de cet élément (11,12,13) lesdites fréquences expérimentales de défaut $\hat{\alpha}$ sont proches, on combine les valeurs de chaque niveau de fiabilité $p(\hat{\alpha})$ selon une seconde loi prédéterminée et on délivre un message d'alerte signalant ledit défaut si le résultat de ladite combinaison est supérieur à un seuil d'alerte prédéterminé.

**15.** Procédé de détection de défauts selon l'une quelconque des revendications 1 à 14,
**caractérisé en ce que** ledit temps d'acquisition prédéterminé dudit signal vibratoire temporel $A_n$ est de l'ordre de cinquante périodes $T^{th}$ d'un signal vibratoire correspondant à un défaut sur ledit roulement (10), ladite période $T^{th}$

$$T^{th} = \frac{1}{\alpha^{th}}.$$

étant l'inverse de ladite fréquence fondamentale théorique $\alpha^{th}$ telle que

**16.** Procédé de détection de défauts selon l'une quelconque des revendications 1 à 15,
**caractérisé en ce que** ledit temps d'acquisition prédéterminé dudit signal vibratoire temporel $A_n$ est de l'ordre de trois secondes.

**17.** Procédé de détection de défauts selon l'une quelconque des revendications 1 à 16,
**caractérisé en ce que** l'on transforme un signal temporel en un signal fréquentiel en appliquant la transformation de Fourier.

**Patentansprüche**

**1.** Verfahren zum Erfassen von Fehlern an einem Lager (10), wobei das Lager (10) mindestens die folgenden Elemente umfasst:

- einen Innenring (11),
- einen Außenring (12) und
- eine Mehrzahl von Rollkörpern (13), die zwischen dem Innenring (11) und dem Außenring (12) abrollen,
in welchem
- in einem Vorbereitungsschritt (1)

  • für jedes Element (11, 12, 13) des Lagers (10) mindestens eine theoretische Grundfrequenz $\alpha^{th}$ bestimmt wird, die einem Fehler dieses Elements (11, 12, 13) entspricht, und
  • eine Frequenzstreuung $\Delta f$ für den Fehler dieses Elements (11, 12, 13) bestimmt wird, die es ermöglicht, ein Intervall $\llcorner \alpha^{th} - \Delta f; \alpha^{th} + \Delta f \lrcorner$ um die theoretische Grundfrequenz $\alpha^{th}$ sowie eine theoretische Grundwahrscheinlichkeit $p^{prior}(f)$ zu definieren, dass jede Frequenz $f$ des Intervalls $\llcorner \alpha^{th} - \Delta f; \alpha^{th} + \Delta f \lrcorner$ dem Fehler dieses Elements (11, 12, 13) entspricht,

- in einem Vorverarbeitungsschritt (2)

  • ein von einem in der Nähe des Lagers (10) angeordneten Beschleunigungssensor ausgegebenes zeitliches Schwingungssignal $A_n$ erfasst wird, das eine Anzahl $N$ von Abtastwerten über eine vorbestimmte Erfassungszeit umfasst, wobei $n$ die Ordnungszahl jedes Abtastwerts ist und von 1 bis $N$ läuft, und
  • das zeitliche Schwingungssignal $A_n$ für seine Analyse transformiert wird,

- in einem Analyseschritt (3)

  • für jedes Element (11, 12, 13) mindestens eine Fehleranwesenheitsfrequenz $\hat{\alpha}$ zu diesem Element (11, 12, 13) und ein jeder Fehleranwesenheitsfrequenz $\hat{\alpha}$ zugeordneter Zuverlässigkeitsgrad $p(\hat{\alpha})$ bestimmt werden, wobei die Fehleranwesenheitsfrequenz $\hat{\alpha}$ einer Schwingungsfrequenz entspricht, die für den Fehler charakteristisch ist, der an einem Element (11, 12, 13) des Lagers (10) vorhanden ist, und sich in dem zuvor definierten Intervall $\llcorner \alpha^{th} - \Delta f; \alpha^{th} + \Delta f \lrcorner$ befindet, wobei der Zuverlässigkeitsgrad $p(\hat{\alpha})$ der Maximalwert einer experimentellen Wahrscheinlichkeit $p^{post}(f)$ des Vorhandenseins eines Fehlers $\hat{\alpha}$ an einem Element (11, 12, 13) des Lagers (10) ist und die Fehleranwesenheitsfrequenz $\hat{\alpha}$ diejenige Frequenz des Intervalls $\llcorner \alpha^{th} - \Delta f; \alpha^{th} + \Delta f \lrcorner$ ist, für das die experimentelle Wahrscheinlichkeit $p^{post}(f)$ maximal ist, wobei die experimentelle Wahrscheinlichkeit $p^{post}(f)$ aus dem zeitlichen Schwingungssignal $A_n$ bestimmt wird und eine Funktion der theoretischen fundamentalen Wahrscheinlichkeit $p^{prior}(f)$ ist,

- in einem Diagnoseschritt (4),

  • in Abhängigkeit von den Werten jeder Fehleranwesenheitsfrequenz $\hat{\alpha}$ und jedes zugehörigen Zuverlässigkeitsgrades $p(\hat{\alpha})$ eine Warnmeldung erzeugt wird, die mindestens einen Fehler an mindestens einem Element (11, 12, 13) des Lagers (10) anzeigt.

**2.** Verfahren zum Erfassen von Fehlern nach Anspruch 1,
**dadurch gekennzeichnet, dass** während des Vorverarbeitungsschritts (2) nach dem Erfassen des zeitlichen Schwingungssignals $A_n$,

- das zeitliche Schwingungssignal $A_n$ gefiltert wird, um ein gefiltertes zeitliches Schwingungssignal $A'_n$ zu er-

halten, und

- das gefilterte zeitliche Schwingungssignal $A'_n$ transformiert wird, um ein deterministisches zeitliches Schwingungssignal und ein zufälliges zeitliches Schwingungssignal zu erhalten.

3. Verfahren zum Erfassen von Fehlern nach Anspruch 2,
**dadurch gekennzeichnet, dass** das Lager (10) Teil eines Systems ist, das mindestens eine erste rotierende Komponente umfasst, mit der das Lager (10) verbunden ist, wobei das zeitliche Schwingungssignal $A_n$ gefiltert wird, indem es mit einer momentanen Drehzahl der ersten Komponente synchronisiert wird, die mittels eines Mittels zum Messen der momentan in dem System vorhandenen Drehzahl gemessen wird.

4. Verfahren zum Erfassen von Fehlern nach einem der Ansprüche 2 bis 3,
**dadurch gekennzeichnet, dass** das zeitliche Schwingungssignal $A_n$ durch Unterdrücken der in dem zeitlichen Schwingungssignal $A_n$ vorhandenen Störschwingungskomponenten gefiltert wird.

5. Verfahren zum Erfassen von Fehlern nach Anspruch 4, **dadurch gekennzeichnet, dass**

- das zeitliche Schwingungssignal $A_n$ in ein frequentielles Schwingungssignal $B_n$ umgewandelt wird,
- das frequentielle Schwingungssignal $B_n$ derjenigen Schwingungsfrequenzen, die von den Komponenten der Vorrichtung außerhalb des Lagers (10) herrühren und deren Schwingungsfrequenzen bekannt sind, unterdrückt wird,
- das frequentielle Schwingungssignal $B_n$ von Schwingungsfrequenzen, die von jeder theoretischen Grundfrequenz $\alpha^{th}$ jedes Elements (11, 12, 13) und ihren Oberwellen um einen Wert größer als die Frequenzstreuung $\Delta f$, die jeder theoretischen Grundfrequenz $\alpha^{th}$ entspricht, entfernt sind, unterdrückt wird, und
- das so modifizierte frequentielle Schwingungssignal $B_n$ in ein zeitliches Schwingungssignal umgewandelt wird.

6. Verfahren zum Erfassen von Fehlern nach einem der Ansprüche 2 bis 5,
**dadurch gekennzeichnet, dass** das gefilterte zeitliche Schwingungssignal $A'_n$ in zwei Signale zerlegt wird:

- ein deterministisches zeitliches Schwingungssignal $D_n$, das eine Linearkombination der Vergangenheitswerte des gefilterten zeitlichen Schwingungssignals $A'_n$ der Form

$$D_n = a_1.A'_{n-1} + a_2.A'_{n-2} + \ldots + a_r.A'_{n-r}$$

ist, wobei $a_1$, $a_2\ldots a_r$ Koeffizienten sind, die so bestimmt werden, dass die Summe $\sum_{n=N-r}^{N}\left(A'_n - D_n\right)^2$ minimal ist, und r die Anzahl der zur Berechnung des deterministischen Signals verwendeten Abtastwerte ist und kleiner als n ist, und

- ein zufälliges zeitliches Schwingungssignal $E_n$, das die Differenz zwischen dem gefilterten zeitlichen Schwingungssignal $A'_n$ und dem deterministischen zeitlichen Schwingungssignal $D_n$ ist.

7. Verfahren zum Erfassen von Fehlern nach Anspruch 6,
**dadurch gekennzeichnet, dass** die Impulsivität des deterministischen zeitlichen Schwingungssignals $D_n$ verbessert wird, um ein verbessertes deterministisches zeitliches Schwingungssignal $F_n$ zu erhalten, das eine Linearkombination der vorherigen Abtastwerte des deterministischen zeitlichen Schwingungssignals $D_n$ der Form

$$F_n = b_1.D_{n-1} + b_2.D_{n-2} + \ldots + b_p.D_{n-p}$$

ist, wobei die Koeffizienten $b_1$, $b_2\ldots b_p$ so bestimmt werden, dass der Kurtosis-Indikator gemäß der folgenden Formel

$$Kurtosis(F_n) = \frac{1}{N}\frac{\sum_{n=1}^{N}\left(F_n - \frac{1}{N}\sum_{n=1}^{N}F_n\right)^4}{\sigma_F^{\,4}}$$

maximal ist, wobei $\sigma_F$ die Standardabweichung des verbesserten deterministischen zeitlichen Schwingungssignals

$F_n$ ist, $p$ die Anzahl der zum Berechnen des verbesserten deterministischen zeitlichen Signals $F_n$ verwendeten Abtastwerte ist und kleiner als $n$ ist, wobei das verbesserte deterministische zeitliche Schwingungssignal $F_n$ dann in dem Analyseschritt (3) verwendet werden kann.

8. Verfahren zum Erfassen von Fehlern nach einem der Ansprüche 6 bis 7,
   **dadurch gekennzeichnet, dass** die Impulsivität des zufälligen zeitlichen Schwingungssignals $E_n$ verbessert wird, um ein verbessertes zufälliges zeitliches Schwingungssignal $G_n$ zu erhalten, indem zuerst das zufällige zeitliche Schwingungssignal $E_n$ transformiert wird, um ein Zwischensignal $E'_n$ zu erhalten, für das $E_n' = |E_n + i \times H(E_n)|^2$ gilt, wobei H die Hilbert-Transformation ist und $i$ die imaginäre Zahl ist, für die $i^2 = -1$ gilt, und dann das verbesserte zufällige zeitliche Schwingungssignal $G_n$ bestimmt wird, das eine Linearkombination der vorherigen Abtastungwerte des Zwischensignals $E'_n$ der Form $G_n = c_1 \cdot E'_{n-1} + c_2 \cdot E'_{n-2} + ... + c_q \cdot E'_{n-q}$ ist, wobei die Koeffizienten $c_1, c_2 ... c_q$ so bestimmt werden, dass der Kurtosis-Indikator gemäß der folgenden Formel

$$Kurtosis(G_n) = \frac{1}{N} \frac{\sum_{n=1}^{N} \left( G_n - \frac{1}{N} \sum_{n=1}^{N} G_n \right)^4}{\sigma_G^{\ 4}}$$

maximal wird, wobei $\sigma_G$ die Standardabweichung des verbesserten zufälligen zeitlichen Schwingungssignals $G_n$ ist, $q$ die Anzahl der zum Berechnen des verbesserten deterministischen zeitlichen Schwingungssignals $G_n$ verwendeten Abtastwerte ist und kleiner als $n$ ist, wobei das verbesserte zufällige zeitliche Schwingungssignal $G_n$ dann in dem Analyseschritt (3) verwendet werden kann.

9. Verfahren zum Erfassen von Fehlern nach einem der Ansprüche 2 bis 8,
   **dadurch gekennzeichnet, dass** im Analyseschritt (3)

   - das deterministische zeitliche Schwingungssignal und das zufällige zeitliche Schwingungssignal in ein deterministisches frequentielles Schwingungssignal $J_n$ bzw. ein zufälliges frequentielles Schwingungssignal $K_n$ umgewandelt werden, um für jedes frequentielle Schwingungssignal $J_n$, $K_n$ und jedes Element (11, 12, 13) Spektrallinien der Amplitude $S(f)$ zu erhalten,
   - für jedes frequentielle Schwingungssignal $J_n$, $K_n$ und für jede Frequenz $f$ des Intervalls $\llcorner \alpha^{th} - \Delta f;\ \alpha^{th} + \Delta f \lrcorner$ die experimentelle Wahrscheinlichkeit $p^{post}(f)$ des Vorhandenseins eines Fehlers an jedem Element (11, 12, 13) berechnet wird, und
   - für jedes Element (11, 12, 13) und für jedes frequentielle Schwingungssignal $J_n$, $K_n$ einerseits die Fehleranwesenheitsfrequenz $\hat{\alpha}$, die der maximalen experimentellen Wahrscheinlichkeit $p^{post}(f)$ entspricht, wenn $f$ das Intervall $\llcorner \alpha^{th} \Delta f;\ \alpha^{th} + \Delta f \lrcorner$ durchläuft, und andererseits das zugeordnete Zuverlässigkeitsniveau $p(\hat{\alpha})$ bestimmt wird, das gleich der maximalen experimentellen Wahrscheinlichkeit $p^{post}(f)$ ist.

10. Verfahren zum Erfassen von Fehlern nach Anspruch 9,
    **dadurch gekennzeichnet, dass** die experimentelle Wahrscheinlichkeit $p^{post}(f)$ gemäß der folgenden Formel berechnet wird;

$$p^{post}(f) = \frac{p^{prior}(f) \times \prod_{m=1}^{M} S_m(f)}{\int_{v=\alpha^{th}+\Delta f}^{\alpha^{th}+\Delta f} \left[ p^{prior}(v) \times \prod_{m=1}^{M} S_m(v) \right] dv}$$

wobei $\Delta f$ die Streuung der Frequenz um die theoretische Grundfrequenz $\alpha^{th}$ ist, $S_m(f)$ die Amplitude der Spektrallinie für die Frequenz $mxf$ ist, für die $S_m(f) = S(mxf)$ gilt, $f$ zum Intervall $\llcorner \alpha^{th} - \Delta f; \alpha^{th} + \Delta f \lrcorner$ gehört und M die Anzahl der in der Formel berücksichtigten Oberwellen von $f$ ist.

11. Verfahren zum Erfassen von Fehlern nach Anspruch 9,
    **dadurch gekennzeichnet, dass** die experimentelle Wahrscheinlichkeit $p^{post}(f)$ nach der Formel

$$p^{post}(f) = \frac{p^{prior}(f) + \sum_{m=1}^{M} S_m(f)}{\int_{v=\alpha^{th}+\Delta f}^{\alpha^{th}+\Delta f} \left[ p^{prior}(v) + \sum_{m=1}^{M} S_m(v) \right] dv}$$

berechnet wird, wobei $\Delta f$ die Streuung der Frequenz um die theoretische Grundfrequenz $\alpha^{th}$ ist, $S_m(f)$ die Amplitude der Spektrallinie für die Frequenz $mxf$ ist, für die $S_m(f)= S(mxf)$ gilt, $f$ zum Intervall $\llcorner\alpha^{th} - \Delta f;\ \alpha^{th} + \Delta f\lrcorner$ gehört und $M$ die Anzahl der in der Formel berücksichtigten Oberwellen von $f$ ist.

12. Verfahren zum Erfassen von Fehlern nach Anspruch 9,
   **dadurch gekennzeichnet, dass** experimentelle Wahrscheinlichkeit $p^{post}(f)$ nach der Formel

$$p^{post}(f) = \frac{min_{m=1\ à\ M}\ p^{prior}(f) \times S_m(f)}{\int_{v=\alpha^{th}+\Delta f}^{\alpha^{th}+\Delta f} min_{m=1\ à\ M} \left[ p^{prior}(v) \times S_m(v) \right] dv}$$

berechnet wird, wobei $\Delta f$ die Streuung der Frequenz um die theoretische Grundfrequenz $\alpha^{th}$ ist, $S_m(f)$ die Amplitude der Spektrallinie für die Frequenz $mxf$ ist, für die $S_m(f)= S(mxf)$ gilt, $f$ zum Intervall $\llcorner\alpha^{th} - \Delta f;\ \alpha^{th} + \Delta f\lrcorner$ gehört und $M$ die Anzahl der in der Formel berücksichtigten Oberwellen von $f$ ist.

13. Verfahren zum Erfassen von Fehlern nach einem der Ansprüche 1 bis 12,
   **dadurch gekennzeichnet, dass** während des Diagnoseschrittes (4), wenn für den Fehler dieses Elements (11, 12, 13) die experimentellen Fehlerfrequenzen $\hat{\alpha}$ voneinander entfernt sind,

   - wenn die jeweiligen Zuverlässigkeitsgrade $p(\hat{\alpha})$ niedrig sind, keine Warnmeldung ausgegeben wird, die auf einen Fehler in diesem Element (11, 12, 13) hinweist,
   - wenn die jeweiligen Zuverlässigkeitsgrade $p(\hat{\alpha})$ hoch sind, die Werte jedes Zuverlässigkeitsgrades $p(\hat{\alpha})$ nach einer ersten vorgegebenen Regel kombiniert werden und eine Warnmeldung ausgegeben wird, die den Fehler anzeigt, wenn das Ergebnis der Kombination größer als ein vorgegebener Warnschwellenwert ist, und
   - wenn ein Zuverlässigkeitsgrad $p(\hat{\alpha})$ einer der beiden experimentellen Fehlerfrequenzen $\hat{\alpha}$ im Vergleich zur anderen niedrig ist, eine Warnmeldung, die den Fehler anzeigt, nur für die Fehleranwesenheitsfrequenz $\hat{\alpha}$ gemäß dem zugehörigen Zuverlässigkeitsgrad $p(\hat{\alpha})$ ausgegeben wird.

14. Verfahren zum Erfassen von Fehlern nach einem der Ansprüche 1 bis 13,
   **dadurch gekennzeichnet, dass** während eines Diagnoseschrittes (4), wenn für den Fehler dieses Elements (11, 12, 13) die experimentellen Fehlerfrequenzen $\hat{\alpha}$ nahe beieinander liegen, die Werte jedes Zuverlässigkeitsniveaus $p(\hat{\alpha})$ gemäß einer zweiten vorgegebenen Regel kombiniert werden und eine Warnmeldung ausgegeben wird, die den Fehler anzeigt, wenn das Ergebnis der Kombination höher als ein vorgegebener Warnschwellenwert ist.

15. Verfahren zum Erfassen von Fehlern nach einem der Ansprüche 1 bis 14,
   **dadurch gekennzeichnet, dass** die vorgegebene Erfassungszeit des zeitlichen Schwingungssignals $A_n$ in der Größenordnung von fünfzig Perioden $T^{th}$ eines Schwingungssignals liegt, das einem Fehler an dem Lager (10) entspricht, wobei die Periode $T^{th}$ der Kehrwert der theoretischen Grundfrequenz $\alpha^{th}$ ist, für den $T^{th} = \dfrac{1}{\alpha^{th}}$ gilt.

16. Verfahren zum Erfassen von Fehlern nach einem der Ansprüche 1 bis 15,
   **dadurch gekennzeichnet, dass** die vorgegebene Erfassungszeit des zeitlichen Schwingungssignals $A_n$ in der Größenordnung von drei Sekunden liegt.

17. Verfahren zum Erfassen von Fehlern nach einem der Ansprüche 1 bis 16,
   **dadurch gekennzeichnet, dass** ein zeitliches Signal durch Anwenden der Fourier-Transformation in ein frequentielles Signal umgewandelt wird.

**Claims**

1. A method of detecting defects in a bearing (10), said bearing (10) comprising at least the following elements:

   - an inner ring (11),
   - an outer ring (12); and
   - a plurality of rolling bodies (13) rolling between said inner ring (11) and said outer ring (12);

   comprising the following steps:

   - during a preliminary step (1):

      ○ determining, for each element (11, 12, 13) of said bearing (10), at least one theoretical fundamental frequency $\alpha^{th}$ corresponding to a defect of this element (11, 12, 13); and
      ○ for said defect of said element (11, 12, 13) determining a frequency dispersion $\Delta f$ serving to define a range $[\alpha^{th} -\Delta f; \alpha^{th} +\Delta f]$ around said theoretical fundamental frequency $\alpha^{th}$ and a theoretical fundamental probability $p^{prior}(f)$ that each frequency $f$ in said range $[\alpha^{th} -\Delta f; \alpha^{th} +\Delta f]$ corresponds to said defect in said element (11, 12, 13),

   - during a pre-processing step (2),

      ○ acquiring a time-domain vibration signal $A_n$ emitted by an acceleration sensor positioned in the proximity of said bearing (10), the signal comprising a number $N$ of samples over a predetermined acquisition time, where $n$ is the order number of each sample and lies in the range 1 to $N$; and
      ○ transforming said time-domain vibration signal $A_n$ for analysis;

   - during an analysis step (3):
      ○ determining for each element (11, 12, 13) at least one defect-presence frequency $\hat{\alpha}$ in said element (11, 12, 13) together with an associated reliability level $p(\hat{\alpha})$ at each defect-presence frequency $\hat{\alpha}$, said defect-presence frequency $\hat{\alpha}$ corresponding to a vibration frequency characteristic of a defect present in an element (11, 12, 13) of said bearing (10) and lying in the predefined range $[\alpha^{th} -\Delta f; \alpha^{th} +\Delta f]$, said reliability level $p(\hat{\alpha})$ being the maximum value of an experimental probability $p^{post}(f)$ for the presence of a defect $\hat{\alpha}$ in an element (11, 12, 13) of said bearing (10) and said presence frequency of said defect $\hat{\alpha}$ being the frequency of said range $[\alpha^{th} -\Delta f; \alpha^{th} +\Delta f]$ for which the experimental probability $p^{post}(f)$ is at a maximum, said experimental probability experimental probability $p^{post}(f)$ being determined on the basis of said time-domain vibration signal $A_n$ and being a function of said theoretical fundamental probability $p^{prior}(f)$; and
      - during a diagnosis step (4):
      ○ delivering an alert message indicating at least one defect in at least one element (11, 12, 13) of said bearing (10) as a function of the values of each defect-presence frequency $\hat{\alpha}$ and of each associated reliability level $p(\hat{\alpha})$.

2. Method of detecting defects according to claim 1,
   **characterised in that**, during said pre-processing step (2), and after acquiring said time-domain vibration signal $A_n$, the method comprises:

      ○ filtering said time-domain vibration signal $A_n$ in order to obtain a filtered time-domain vibration signal $A'_n$; and
      ○ transforming said filtered time-domain vibration signal $A'_n$ in order to obtain a deterministic time-domain vibration signal and a random time-domain vibration signal.

3. Method of detecting defects according to claim 2,
   **characterised in that** said bearing (10) forms part of a system including at least one first component in rotation to which said bearing (10) is connected, and said time-domain vibration signal $A_n$ is filtered by being synchronized with an instantaneous speed of rotation of said first component as measured by means for measuring said instantaneous speed of rotation that are present in said system.

4. Method of detecting defects according to either claim 2 or claim 3,
   **characterised in that** said time-domain vibration signal $A_n$ is filtered by eliminating interfering vibratory components present in said time-domain vibration signal $A_n$.

5. Method of detecting defects according to claim 4, **characterised by** the following steps:

   - transforming said time-domain vibration signal $A_n$ into a frequency-domain vibration signal $B_n$,
   - eliminating from said frequency-domain vibration signal $B_n$ vibration frequencies that come from components of said device external to said bearing (10), said components having vibration frequencies that are known,
   - eliminating from said frequency-domain vibration signal $B_n$ vibration frequencies that are offset from each theoretical fundamental frequency $\alpha^{th}$ of each element (11, 12, 13) and its harmonics by an amount that is greater than said frequency dispersion $\Delta f$ corresponding to each theoretical fundamental frequency $\alpha^{th}$, and
   - transforming said frequency-domain vibration signal $B_n$ as modified in this way in order to obtain a time-domain vibration signal.

6. Method of detecting defects according to any one of claims 2 to 5,
   **characterised in that** said filtered time-domain vibration signal $A'_n$ is resolved into two signals:

   - a deterministic time-domain vibration signal $D_n$, which is a linear combination of past values of said filtered time-domain vibration signal $A'_n$, such that: $D_n = \alpha_1.A'_{n-1}+\alpha_2.A'_{n-2}+...+\alpha_r.A'_{n-r}$ where $\alpha_1$, $\alpha_2$, ..., $\alpha_r$ are coefficients determined in such a manner that the sum: $\sum_{n=N-r}^{N}\left(A'_n - D_n\right)^2$ is minimised and where r is the number of samples used for calculating said deterministic signal and is less than $n$ and
   - a random time-domain vibration signal $E_n$, which is the difference between said filtered time-domain vibration signal $A'_n$ and said deterministic time-domain vibration signal $D_n$.

7. Method of detecting defects according to claim 6,
   **characterised in that** the impulsivity of said deterministic time-domain vibration signal $D_n$ is improved in order to obtain an improved deterministic time-domain vibration signal $F_n$, which is a linear combination of earlier samples of said deterministic time-domain vibration signal $D_n$ such that: $F_n=b_1.D_{n-1}+b_2.D_{n-2}+... +b_p.D_{n-p}$ where the coefficients $b_1$, $b_2$, ..., $b_p$ are determined so that the *Kurtosis* indicator given by the following formula:

$$Kurtosis(F_n) = \frac{1}{N} \frac{\sum_{n=1}^{N}\left(F_n - \frac{1}{N}\sum_{n=1}^{N}F_n\right)^4}{\sigma_F^{\,4}}$$

   is maximised, where $\sigma_F$ is the standard deviation of said improved deterministic time-domain vibration signal $F_n$, where $p$ is the number of samples used for calculating said improved deterministic time-domain vibration signal $F_n$ and is less than $n$, and where said improved deterministic time-domain vibration signal $F_n$ is then suitable for use in said analysis step (3).

8. Method of detecting defects according to either claim 6 or claim 7,
   **characterised in that** the impulsivity of said random time-domain vibration signal $E_n$ is improved in order to obtain an improved random time-domain vibration signal $G_n$ by initially transforming the random time-domain vibration signal $E_n$ to obtain an intermediate signal $E'_n$ such that: $E'_n = |E_n + i \times H(E_n)|^2$, where $H$ is the Hilbert transform and $i$ is the imaginary number such that $i^2=-1$, and then subsequently determining said improved random time-domain vibration signal $G_n$, which is a linear combination of earlier samples of said intermediate signal $E'_n$ such that: $G_n =c_1.E'_{n-1}+c_2.E'_{n-2}+...+c_q.E'_{n-q}$, where the coefficients $c_1$, $c_2$, .. ., $c_q$ are determined so that the *Kurtosis* indicator given by the following formula:

$$Kurtosis(G_n) = \frac{1}{N} \frac{\sum_{n=1}^{N}\left(G_n - \frac{1}{N}\sum_{n=1}^{N}G_n\right)^4}{\sigma_G^{\,4}}$$

   is maximised, where $\sigma_G$ is the standard deviation of said improved random time-domain vibration signal $G_n$, where $q$ is the number of samples used for calculating said improved deterministic time-domain vibration signal $G_n$ and is less than $n$, and where said improved random time-domain vibration signal $G_n$ can then be used during said analysis step (3).

9. Method of detecting defects according to any one of claims 2 to 8,
   **characterised in that**, during said analysis step (3) the following sub-steps are performed:

   ◦ transforming said deterministic time-domain vibration signal and said random time-domain vibration signal respectively into a deterministic frequency-domain vibration signal $J_n$ and a random frequency-domain vibration signal $K_n$ in order to obtain spectrum lines of amplitude $S(f)$ for each frequency-domain vibration signal $J_n$, $K_n$ and for each element (11, 12, 13),
   ◦ calculating for each frequency-domain vibration signal $J_n$, $K_n$ and for each frequency $f$ in the range: $[\alpha^{th} - \Delta f; \alpha^{th} + \Delta f]$ said experimental probability $p^{post}(f)$ for the presence of a defect in each element (11, 12, 13); and
   ◦ determining for each element (11, 12, 13) and for each frequency-domain vibration signal $J_n$, $K_n$ firstly said defect-presence frequency $\hat{\alpha}$ corresponding to said maximum experimental probability $p^{post}(f)$ when $f$ passes through the range: $[\alpha^{th} - \Delta f; \alpha^{th} + \Delta f]$ and secondly said associated reliability level $p(\hat{\alpha})$, which is equal to said maximum experimental probability $p^{post}(f)$.

10. Method of detecting defects according to claim 9,
    **characterised in that** said experimental probability $p^{post}(f)$ is calculated using the following formula:

$$p^{post}(f) = \frac{p^{prior}(f) \times \prod_{m=1}^{M} S_m(f)}{\int_{v=\alpha^{th}+\Delta f}^{\alpha^{th}+\Delta f} \left[ p^{prior}(v) \times \prod_{m=1}^{M} S_m(v) \right] dv}$$

    where $\Delta f$ is said frequency dispersion about said theoretical fundamental frequency $\alpha^{th}$, where $S_m(f)$ is said amplitude of said spectrum line for said frequency $mxf$ such that $S_m(f)=S(m \times f)$, where $f$ lies in the range: $[\alpha^{th} - \Delta f; \alpha^{th} + \Delta f]$ and where $M$ is the number of harmonics of $f$ taken into account in the formula.

11. Method of detecting defects according to claim 9,
    **characterised in that** said experimental probability $p^{post}(f)$ is calculated using the following formula:

$$p^{post}(f) = \frac{p^{prior}(f) + \sum_{m=1}^{M} S_m(f)}{\int_{v=\alpha^{th}+\Delta f}^{\alpha^{th}+\Delta f} \left[ p^{prior}(v) + \sum_{m=1}^{M} S_m(v) \right] dv}$$

    where $\Delta f$ is said frequency dispersion about said theoretical fundamental frequency $\alpha^{th}$, where $S_m(f)$ is said amplitude of said spectrum line for said frequency $mxf$ such that $S_m(f)=S(m \times f)$, where $f$ lies in the range: $[\alpha^{th} - \Delta f; \alpha^{th} + \Delta f]$ and where $M$ is the number of harmonics of $f$ taken into account in the formula.

12. Method of detecting defects according to claim 9,
    **characterised in that** said experimental probability $p^{post}(f)$ is calculated using the following formula:

$$p^{post}(f) = \frac{min_{m=1 \, à \, M} \; p^{prior}(f) \times S_m(f)}{\int_{v=\alpha^{th}+\Delta f}^{\alpha^{th}+\Delta f} min_{m=1 \, à \, M} \left[ p^{prior}(v) \times S_m(v) \right] dv}$$

    where $\Delta f$ is said frequency dispersion about said theoretical fundamental frequency $\alpha^{th}$, where $S_m(f)$ is said amplitude of said spectrum line for said frequency $mxf$ such that $S_m(f)=S(m \times f)$, where $f$ lies in the range: $[\alpha^{th} - \Delta f; \alpha^{th} + \Delta f]$ and where $M$ is the number of harmonics of $f$ taken into account in the formula.

13. Method of detecting defects according to any one of claims 1 to 12,
    **characterised in that** during said diagnosis step (4), when, for said defect in said element (11, 12, 13), said experimental defect frequencies $\hat{\alpha}$ are far apart from one another:

    - if said respective reliability levels $p(\hat{\alpha})$ are small, no alert message is delivered indicating a defect in this element (11, 12, 13),

- if said respective reliability levels $p(\hat{\alpha})$ are large, the values of each of the reliability levels $p(\hat{\alpha})$ are combined using a first predetermined relationship and an alert message is delivered indicating said defect if the result of said combination is greater than a predetermined alert threshold, and
- if a reliability level $p(\hat{\alpha})$ of one of said two experimental defect frequencies $\hat{\alpha}$ is small compared with the other, an alert message is potentially delivered indicating said defect solely for said defect-presence frequency $\hat{\alpha}$ as a function of said associated reliability level $p(\hat{\alpha})$.

**14.** Method of detecting defects according to any one of claims 1 to 13,
**characterised in that**, during a diagnosis step (4), if for said defect in said element (11, 12, 13) said experimental defect frequencies $\hat{\alpha}$ are close together, the values of each reliability level $p(\hat{\alpha})$ are combined using a second predetermined relationship and an alert message is delivered indicating said defect if the result of said combination is greater than a predetermined alert threshold.

**15.** Method of detecting defects according to any one of claims 1 to 14,
**characterised in that** said predetermined acquisition time for acquiring said time-domain vibration signal An is of the order of fifty periods $T^{th}$ of a vibration signal corresponding to a defect in said bearing (10), where said period

$$T^{th} = \frac{1}{\alpha^{th}} .$$

$T^{th}$ is the reciprocal of said theoretical fundamental frequency $\alpha^{th}$, such that

**16.** Method of detecting defects according to any one of claims 1 to 15,
**characterised in that** said predetermined acquisition time for acquiring said time-domain vibration signal $A_n$ is of the order of three seconds.

**17.** Method of detecting defects according to any one of claims 1 to 16,
wherein a time-domain vibration signal is transformed into a frequency-domain signal by applying the Fourier transform.

Fig.1

Fig.2

Fig.3

Fig.4

Fig.5

Fig.6

**EP 2 693 176 B1**

## RÉFÉRENCES CITÉES DANS LA DESCRIPTION

**Documents brevets cités dans la description**

- EP 0889313 A
- EP 1111364 A
- EP 1970691 A
- WO 2010081983 A
- US 7136794 B
- US 2010332186 A

**Littérature non-brevet citée dans la description**

- Assessment of bearing fault detection using vibration signais analysis. *VSRD technical and non-Technical Journal,* 2011